(19)

Europäisches
Patentamt
European
Patent Office
Office européen
des brevets

(11) **EP 4 460 129 A1**

(12) **EUROPEAN PATENT APPLICATION**
published in accordance with Art. 153(4) EPC

(43) Date of publication:
**06.11.2024 Bulletin 2024/45**

(21) Application number: **22915201.2**

(22) Date of filing: **30.12.2022**

(51) International Patent Classification (IPC):
***H04W 72/04*** (2023.01)

(52) Cooperative Patent Classification (CPC):
**H04W 72/04; H04W 72/0446; H04W 72/232**

(86) International application number:
**PCT/CN2022/144014**

(87) International publication number:
**WO 2023/125953 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 CN 202111673268**

(71) Applicant: **VIVO MOBILE COMMUNICATION CO., LTD.**
**Dongguan, Guangdong 523863 (CN)**

(72) Inventor: **ZENG, Chaojun**
**Dongguan, Guangdong 523863 (CN)**

(74) Representative: **Murgitroyd & Company**
**165-169 Scotland Street**
**Glasgow G5 8PL (GB)**

(54) **TIME-DOMAIN BINDING PROCESSING METHOD, TERMINAL, AND NETWORK SIDE DEVICE**

(57)     This application discloses a time domain bundling processing method, a terminal and a network side device, belonging to the field of communication technologies, and the method includes: determining a target operation when a terminal is configured to use time domain bundling for codebook transmission. When a codebook is a first codebook, the target operation includes at least one of the following: not expecting that a quantity of scheduled rows in a row set corresponding to a first occasion is greater than 1; and in a case that the quantity of scheduled rows in the row set corresponding to the first occasion is greater than 1, performing a first operation on the scheduled row in the row set corresponding to the first occasion. When the codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI.

FIG. 1

**Description**

**CROSS-REFERENCE TO RELATED APPLICATION**

This application claims priority to Chinese Patent Application No.202111673268.8 filed on December 31, 2021 in China, which is incorporated herein by reference in its entirety.

**TECHNICAL FIELD**

This application relates to the field of communication technologies, and in particular, to a time domain bundling processing method, a terminal, and a network side device.

**BACKGROUND**

Multi-physical downlink shared channel (Multi-Physical Downlink Shared Channel, Multi-PDSCH) scheduling transmission is introduced in some communication systems. Multi-PDSCH scheduling means that a single piece of downlink control information (Downlink Control Information, DCI) can schedule a plurality of physical downlink shared channels (Physical downlink shared channel, PDSCH) for transmission on the same carrier at one time. However, in these communication systems, when a terminal transmits a codebook, there is no corresponding solution based on some configurations. Therefore, configuration flexibility is poor.

**SUMMARY**

Embodiments of this application provide a time domain bundling processing method, a terminal and a network side device, which can solve a problem of poor configuration flexibility when the terminal transmits a codebook.

According to a first aspect, a time domain bundling processing method is provided, and the method includes:

> determining, by a terminal, a target operation when the terminal is configured to use time domain bundling for codebook transmission; where
> when a codebook is a first codebook, the target operation includes at least one of the following:
>
>> not expecting that a quantity of scheduled rows in a row set corresponding to a first occasion is greater than 1;
>> expecting that a physical downlink shared channel PDSCH corresponding to the last time domain resource assignment record of any scheduled and/or configured row of a time domain resource assignment TDRA table is a valid PDSCH; and
>> when the quantity of scheduled rows in the row set corresponding to the first occasion is greater than 1, performing a first operation on the scheduled rows in the row set corresponding to the first occasion; where
the first occasion is any one occasion in an occasion set corresponding to the codebook, and the row set corresponding to the first occasion includes row(s) corresponding to the first occasion in a TDRA table; or
when a codebook is a second codebook, the target operation includes at least one of the following:

> when spatial bundling is not configured to be used, uniformly dividing bundling group(s) for a plurality of transport blocks TB, or separately dividing bundling group(s) for each TB in the plurality of TBs, and when the spatial bundling is configured to be used, dividing bundling group(s) for all scheduled PDSCHs or all valid PDSCHs scheduled by a piece of downlink control information DCI.

According to a second aspect, a time domain bundling processing method is provided, and the method includes:

> determining, by a network side device, a target operation when a codebook of a terminal is configured to use time domain bundling for transmission, where when the codebook is a first codebook, the target operation includes at least one of the following:
>
>> a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table, and
>> determining that a physical downlink shared channel PDSCH corresponding to the last time domain resource assignment record of any scheduled and/or configured row of a time domain resource assignment TDRA table is a valid PDSCH; or
>> when the codebook is a second codebook, the target operation includes at least one of the following:
>>
>>> when spatial bundling is not configured to be used, uniformly dividing bundling group(s) for a plurality of transport blocks TB, or separately dividing bundling group(s) for each TB in the plurality of TBs; and
>>> when the spatial bundling is configured to be used, dividing bundling group(s) for all scheduled PDSCHs or all valid PDSCHs scheduled by a piece of downlink control information DCI.

In a third aspect, a time domain bundling processing apparatus is provided, including:
a determining module, configured to determine a target operation when configured to use time domain bundling for codebook transmission.

When a codebook is a first codebook, the target operation includes at least one of the following:

not expecting that a quantity of scheduled rows in a row set corresponding to a first occasion is greater than 1;
expecting that a physical downlink shared channel PDSCH corresponding to the last time domain resource assignment record of any scheduled and/or configured row of a time domain resource assignment TDRA table is a valid PDSCH; and
when the quantity of scheduled rows in the row set corresponding to the first occasion is greater than 1, performing a first operation on the scheduled row in the row set corresponding to the first occasion.

The first occasion is any one occasion in an occasion set corresponding to the codebook, and the row set corresponding to the first occasion includes row(s) corresponding to the first occasion in the TDRA table.

When a codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

According to a fourth aspect, a time domain bundling processing apparatus is provided, including:
a first determining module, configured to determine a target operation when a codebook of a terminal is configured to use time domain bundling for transmission.

When the codebook is a first codebook, the target operation includes at least one of the following:

a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table, and
determining that a physical downlink shared channel PDSCH corresponding to the last time domain resource assignment record of any scheduled and/or configured row of a time domain resource assignment TDRA table is a valid PDSCH.

When the codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

According to a fifth aspect, an embodiment of this application provides a terminal, including a processor and a memory. The memory stores a program and instructions executable on the processor. When the program or instructions are executed by the processor, steps of the method are implemented according to the first aspect.

In a sixth aspect, a terminal is provided, including a processor and a communication interface, where the processor is configured to: determine a target operation when the terminal is configured to use time domain bundling for codebook transmission.

When a codebook is a first codebook, the target operation includes at least one of the following:

not expecting that a quantity of scheduled rows in a row set corresponding to a first occasion is greater than 1;
expecting that a physical downlink shared channel PDSCH corresponding to the last time domain resource assignment record of any scheduled and/or configured row of a time domain resource assignment TDRA table to be a valid PDSCH; and
when the quantity of scheduled rows in the row set corresponding to the first occasion is greater than 1, performing a first operation on the scheduled row in the row set corresponding to the first occasion, where
the first occasion is any one occasion in an occasion set corresponding to the codebook, and the row set corresponding to the first occasion includes row(s) corresponding to the first occasion in a TDRA table.

When a codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

According to a seventh aspect, an embodiment of this application provides a network side device, including a processor and a memory. The memory stores a program or instructions executable on the processor. When the program or instructions are executed by the processor, steps of the method are implemented according to the first aspect.

According to an eighth aspect, a network side device is provided, including a processor and a communication interface, where the processor is configured to: determine a target operation when a codebook of a terminal is configured to use time domain bundling for transmission.

When the codebook is a first codebook, the target operation includes at least one of the following:

a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table, and
determining that a physical downlink shared channel PDSCH corresponding to the last time domain resource assignment record of any scheduled and/or configured row of a time domain resource assignment TDRA table is a valid PDSCH.

When the codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

According to a ninth aspect, a time domain bundling processing system is provided, including: a terminal and a network side device. The terminal can be configured to perform the step of the time domain bundling processing method applied to the terminal as described in the first aspect, and the network side device can be configured to perform the step of the time domain bundling processing method applied to the network side device as described in the second aspect.

According to a tenth aspect, a readable storage medium is provided, storing a program or instructions. When the program or instructions are executed by a processor, the step of the method in the first aspect is implemented, or the step of the method in the second aspect is implemented.

According to an eleventh aspect, a chip is provided, including a processor and a communication interface. The communication interface is coupled to the processor, and the processor is configured to run a program or instructions to implement the method in the first aspect or implement the method in the second aspect.

According to a twelfth aspect, a computer program product is provided, stored in a non-transient readable storage medium. The computer program product is executed by at least one processor to implement the step of the time domain bundling processing method in the first aspect, or the computer program/program product is executed by at least one processor to implement the step of the time domain bundling processing method in the second aspect.

In embodiments of this application, the terminal determines a target operation when the terminal is configured to use time domain bundling for codebook transmission. When the codebook is a first codebook, the target operation includes at least one of the following: not expecting that a quantity of scheduled rows in a row set corresponding to a first occasion is greater than 1; expecting that a physical downlink shared channel PDSCH corresponding to the last time domain resource assignment record of any scheduled and/or configured row of a time domain resource assignment TDRA table to be a valid PDSCH; and when the quantity of scheduled rows in the row set corresponding to the first occasion is greater than 1, performing a first operation on the scheduled row in the row set corresponding to the first occasion. The first occasion is any one occasion in an occasion set corresponding to the codebook, and the row set corresponding to the first occasion includes row(s) corresponding to the first occasion in a TDRA table. When a codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI. In this way, when the codebook is configured to use the time domain bundling for transmission, an occasion conflict problem can be solved by determining the target operation for the first codebook. When the codebook is configured to use the time domain bundling for transmission, for the second codebook, an operation of dividing the bundling group is determined by determining the target operation when the time domain bundling and the spatial bundling are jointly configured. Therefore, higher flexibility can be allowed to better match an actual application scenario, configuration flexibility can be improved, and PDSCH retransmission performance can be improved.

## BRIEF DESCRIPTION OF THE DRAWINGS

FIG. 1 is a block diagram of a wireless communication system that can be used in an embodiment of this application;

FIG. 2 is a flowchart of a c time domain bundling processing method according to an embodiment of this application;

FIG. 3 is a schematic diagram of mapping of an occasion according to an embodiment of this application;

FIG. 4 is a flowchart 2 of a time domain bundling processing method according to an embodiment of this application;

FIG. 5 is a diagram of a structure of a time domain bundling processing apparatus according to an embodiment of this application;

FIG. 6 is a diagram 2 of a structure of a time domain bundling processing apparatus according to an embodiment of this application;

FIG. 7 is a diagram of a structure of a communication device according to an embodiment of this application;

FIG. 8 is a schematic diagram of a structure of a terminal according to an embodiment of this application; and

FIG. 9 is a schematic diagram of a structure of a network side device according to an embodiment of this application.

## DESCRIPTION OF EMBODIMENTS

The technical solutions in embodiments of this application are clearly and completely described in the following with reference to the accompanying drawings in embodiments of this application. Apparently, the described embodiments are merely some rather than all of embodiments of this application. All other embodiments obtained by persons skilled in the art based on embodiments of this application fall within the protection scope of this application.

The specification and claims of this application, and terms "first" and "second" are used to distinguish similar objects, but are unnecessarily used to describe a specific sequence or order. It is to be understood that terms used in this way is exchangeable in a proper case, so that embodiments of this application described herein can be implemented in an order different from the order shown or described herein. Objects distinguished by "first" and "second" are usually of one type, and there is no limit to a quantity of objects, for example, a first object may be one or more than one. In addition, "and/or" used in this specification and the claims represents at least one of the connected objects. The character "/" generally indicates an "or" relationship between the associated objects.

It is worth pointing out that the technologies described in embodiments of this application are not limited to a long term evolution (Long Term Evolution, LTE)/LTE-advanced (LTE-Advanced, LTE-A) system, and may further be applied to another wireless communication system such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" are usually used interchangeably in embodiments of this application. The technology described can be applied to the systems and radio technologies mentioned above, and can also be applied to other systems and radio technologies. The following descriptions describe a new radio (New Radio, NR) system for an example purpose and uses an NR term in most of the following descriptions, but these techniques may also be applied to applications other than an NR system application, such as a 6$^{th}$ generation (6$^{th}$ Generation, 6G) communication system.

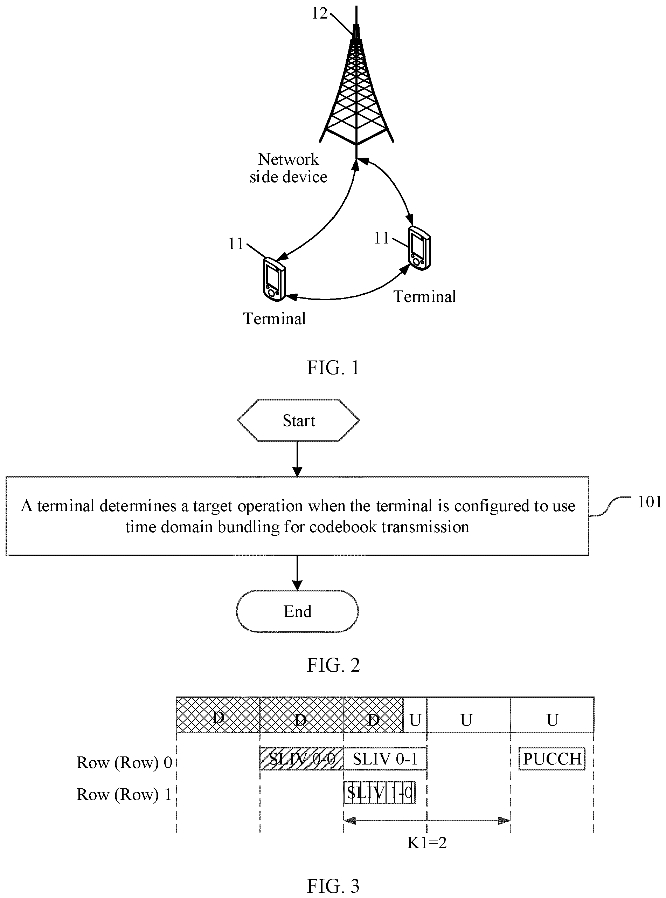

FIG. 1 is a block diagram of a wireless communication system that can be used in an embodiment of this application. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home equipment with a wireless communication function, such as a refrigerator, a TV, a washing machine or furniture), a game machine, a personal computer (personal computer, PC), a teller machine or self-service machine and another terminal side device. Wearable devices include: a smart watch, a smart bracelet, a smart headphone, smart glasses, smart jewelry (a smart bracelet, a smart chain bracelet, a smart ring, a smart necklace, a smart anklet, or a smart chain anklet), a smart wristband, and smart clothing. It should be noted that, a specific type of the terminal 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, or the like. The base station may be referred to as a NodeB, an evolved NodeB, (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another suitable term in the art. Provided that the same technical effect is achieved, the base station is not limited to a particular technical vocabulary. It should be noted that, only a base station in the NR system is used as an example in embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in embodiments of this application, only the core network device in the NR system is introduced as an example, and a specific type of the core network device is not limited. The terminal may also be referred to as user equipment (User Equipment, UE).

For convenience of understanding, some content in embodiments of this application is simply described in the following.

Multi-PDSCH scheduling:

During a study of 52.6-71 GHz characteristics, it is determined that new subcarrier spacing (Subcarrier Spacing, SCS), including 480 kHz and 960 kHz, needs to be introduced for a new NR deployment frequency band. For the newly introduced SCS, physical downlink control channel (Physical downlink control channel, PDCCH) monitoring needs to be accordingly adjusted or enhanced, for example, it is avoided that user equipment (User Equipment, UE) needs to monitor a PDCCH in every slot (Slot) to reduce implementation complexity of the UE. Accordingly, for making full use of carrier time domain resources, Multi-PDSCH scheduling and Multi-PUSCH scheduling need to be studied and/or introduced.

Multi-PDSCH scheduling means that a single piece of DCI can schedule a plurality of pieces of PDSCH transmission on the same carrier at one time. According to the protocol of NR, these PDSCHs do not overlap each other in time domain.

When one serving cell (Serving cell) configured for UE supports Multi-PDSCH scheduling, at least one row in a time domain resource assignment (Time Domain Resource Assignment, TDRA) table (table) configured for the serving cell is configured with more than one entry (Entry) or a start and length indicator value (Start and length indicator value, SLIV). Downlink scheduling DCI directs a row in the TDRA table to schedule, for the UE, a PDSCH corresponding to each Entry or SLIV in an indicator row, and one Entry or SLIV gives time domain resource assignment information corresponding to the PDSCH.

For the Multi-PDSCH scheduling, feedback is obtained based on a hybrid automatic repeat request acknowledgement (automatic repeat request acknowledgement, HARQ-ACK) feedback based on time domain bundling (Time domain bundling):

For the Multi-PDSCH scheduling, a Type-1 (Type-1) codebook (codebook) or a Type-2 codebook can be configured to be used. The Type-1 codebook is a semi-static codebook, and the Type-2 codebook is a dynamic codebook. For the Type-1 codebook, when the Time domain bundling is configured to be used, an occasion (Occasion) in the Type-1 HARQ-ACK codebook is determined and mapped based on the last (Last) SLIV of each row in the TDRA table, and a logical and operation (Logical AND operation) is performed for all valid (Valid) PDSCHs mapped to one Occasion. For the Type-2 codebook, when the time domain bundling is configured to be used, a bundling group is divided for one or more scheduled (Scheduled) PDSCHs or Valid PDSCHs scheduled by each piece of DCI, and a value of a HARQ-ACK bit corresponding to the Bundling group in the Type-2 HARQ-ACK codebook is determined based on a situation of each Bundling group.

The following are descriptions of some nouns involved.

Scheduled PDSCH: A Scheduled PDSCH refers to one of one to more PDSCHs scheduled by a single piece of DCI. The scheduled PDSCH corresponds to one Entry or SLIV configured in one row in a TDRA table indicated by the DCI, and may be a Valid PDSCH or an invalid (Invalid) PDSCH.

Valid PDSCH: A valid PDSCH refers to, in one to more PDSCHs scheduled by a single piece of DCI, a PDSCH that does not conflict with a semi-static (Semi-static) uplink (UL) symbol (symbol), and the valid PDSCH can be understood as a scheduled PDSCH that can be actually transmitted.

Invalid PDSCH: An invalid PDSCH refers to, in one to more PDSCHs scheduled by a single piece of DCI, a PDSCH that conflicts with a Semi-static UL symbol, and the invalid PDSCH can be understood as a Scheduled PDSCH that cannot be actually transmitted.

TB disabling (disabling): When a higher layer configuration allows dual code word transmission, to be specific, for one given Serving cell of UE, maxNrofCode-WordsScheduledByDCI is configured for an active (Active) downlink (Downlink, DL) bandwidth part (Bandwidth Part, BWP) of n2, and it can be determined in one way whether one TB is enabled (to be specific, actually scheduled) or disabled (to be specific, actually not scheduled) for one to more Valid PDSCHs scheduled by one piece of DCI. Any one of the following methods can be applied.

(1) TB disabling manner 1: For one transport block (Transport Block, TB) (for example, a 1st TB or a 2nd TB), all Valid PDSCHs scheduled by a single piece of DCI uniformly are determined to be an enabled or a disabled state.

For example, for one TB, when it is indicated in the DCI that a modulation and coding scheme (Modulation and coding scheme, MCS) corresponding to the TB satisfies IMCS=26, and a value of a redundancy version (redundancy version, RV) bit sequence corresponding to the TB in the DCI is one predefined 0 and/or 1 sequence, it is indicated that the TB of each Valid PDSCH scheduled by the DCI is disabled. When the above conditions are not satisfied, the TB of each Valid PDSCH scheduled by the DCI is considered to be enabled.

An RV bit sequence corresponding to one TB in the DCI may be any of the following.

(a) All RV bits reserved for the TB in the DCI are cascaded in sequence. For example, it is assumed that a maximum quantity of Entries or SLIVs configured in one row in a TDRA table is M. When a quantity of PDSCHs scheduled by one piece of DCI is greater than 1, M RV bits are reserved for one TB in the DCI, that is, an RV bit sequence corresponding to the TB includes M bits.

(b) All RV bits corresponding to one Scheduled PDSCH scheduled by DCI in all RV bits reserved for the TB in the DCI are cascaded in sequence. For example, when a quantity N of PDSCHs scheduled by one piece of DCI is greater than 1 (N≤M), M RV bits are reserved for one TB in the DCI, where only N RV bits actually indicate RV information of the Scheduled PDSCH, that is, an RV bit sequence corresponding to the TB includes N bits.

(c) Cascading all RV bits corresponding to one Valid PDSCH scheduled by DCI in all RV bits reserved for the TB in the DCI. For example, when a quantity N of PDSCHs scheduled by one piece of DCI is greater than 1 (N≤M) and includes N1 Valid PDSCHs (N1≤N), M RV bits are reserved for one TB in the DCI, where only N1 RV bits actually indicate RV information of the Valid PDSCH, that is, an RV bit sequence corresponding to the TB includes N1 bits.

The predefined 0 and/or 1 sequence may be an all 0 or all 1 sequence equal in length to the RV bit sequence, for example, the all 1 sequence of length M, N, or N1.

(2) TB disabling manner 2: For one TB (for example, a 1st TB or a 2nd TB), each Valid PDSCH scheduled by a single piece of DCI separately and independently determines an enabled or a disabled state.

For example, for one TB and one Valid PDSCH, when an MCS corresponding to the TB indicated in the DCI satisfies IMCS=26, and a value of an RV bit corresponding to the TB and the Valid PDSCH in the DCI is one predefined value, it is indicated that the TB of the Valid PDSCH is disabled. When the above conditions are not satisfied, the TB of the Valid PDSCH is considered to be enabled.

For example, an RV bit corresponding to one TB and one Valid PDSCH in DCI includes only a single bit, and a predefined value may be 1, or a value corresponding to rvid=2.

A time domain bundling processing method provided by embodiments of this application is described in detail with reference to the drawings by using some embodiments and application scenarios.

FIG. 2 is a flowchart of a time domain bundling processing method according to an embodiment of this application. As shown in FIG. 2, the time domain bundling processing method includes the following steps.

Step 101: A terminal determines a target operation when the terminal is configured to use time domain bundling for codebook transmission.

When a codebook is a first codebook, the target operation includes at least one of the following:

not expecting that a quantity of scheduled rows in a row set corresponding to a first occasion is greater than 1;

expecting that a physical downlink shared channel PDSCH corresponding to the last time domain resource assignment record of any scheduled and/or configured row of a time domain resource assignment TDRA table is a valid PDSCH; and

when the quantity of scheduled rows in the row set corresponding to the first occasion is greater than 1, performing a first operation on the scheduled row in the row set corresponding to the first occasion.

The first occasion is any one occasion in an occasion set corresponding to the codebook, and the row set corresponding to the first occasion includes row(s) corresponding to the first occasion in the TDRA table.

When the codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and

in a case that the spatial bundling is configured to be used, dividing bundling group(s) for all scheduled PDSCHs or all valid PDSCHs scheduled by a piece of downlink control information DCI.

The first codebook may be a semi-static (Type-1) codebook, and the second codebook may be a dynamic (Type-2) codebook. The row of the TDRA table configured above may include a row of the TDRA table indicated to UE in DCI activated by using SPS, by a network side device, based on a semi-persistent scheduling (Semi-persistent scheduling, SPS) mechanism. The time domain resource assignment record may correspond to a SLIV, may include the SLIV, or may be a record indicating time domain resource assignment information corresponding to a single PDSCH. This is not limited in this embodiment. In one embodiment, each time domain resource assignment record corresponds to or includes a single SLIV. The row set corresponding to the first occasion may include one or more rows corresponding to the first occasion in the TDRA table. The above-described first operation may include an and operation. For example, the first operation may be a logical and operation (logical AND operation); or it may be a binary and operation (binary AND operation). This embodiment does not limit the first operation.

It should be noted that, for any Invalid PDSCH, it can be considered that the invalid PDSCH is not actually scheduled and does not need to be received. Therefore, it is allowed that another configured and/or scheduled PDSCH to overlap with a time domain of the invalid PDSCH. Optionally, another configured and/or dynamically scheduled physical channel and/or signal may also be allowed to overlap the time domain of the invalid PDSCH, such as a dynamically scheduled PUSCH, as long as another predefined requirement and/or condition is satisfied.

For the above processing rule, when the Type-1 codebook is used and the Time domain bundling is configured, if a current Occasion mapping scheme is used based on the Last SLIV of each row in the TDRA table, there is an Occasion conflict problem. For example, in FIG. 3, a row (Row) 0 and a Row 1 of a TDRA table are both mapped to the same Occasion based on respective Last SLIV, and the two rows can be scheduled at the same time according to the above processing rule. When the two rows are actually scheduled at the same time, if a Logical AND operation is performed only for a Valid PDSCH scheduled based on the same TDRA table row currently, it is needed to set a HARQ-ACK bit corresponding to the same Occasion mapped based on results obtained by separately performing the Logical AND operation on the two rows, thus causing a conflict.

The Occasion conflict problem mentioned above can be solved by any one of solutions 1 to 3:

Manner 1: It is not expected that the quantity of scheduled rows in the row set corresponding to the first occasion is greater than 1.

In one implementation: The UE does not expect more than one TDRA table row to be actually scheduled for one Occasion. It can be understood that a base station avoids the above-mentioned Occasion conflict by implementing the scheduling, and the UE only needs to consider performing the Logical AND operation on the Valid PDSCH scheduled on the same TDRA table row, and sets the HARQ-ACK bit corresponding to the mapped Occasion.

Manner 2: It is expected that the physical downlink shared channel PDSCH corresponding to the last time domain resource assignment record of the row of the arbitrarily scheduled and/or configured time domain resource assignment TDRA table is a valid PDSCH.

In one implementation: The UE expects a PDSCH corresponding to the Last SLIV of any scheduled and/or configured TDRA table row to be a Valid PDSCH or not conflict with a Semi-static UL symbol. Alternatively, the UE does not expect a PDSCH corresponding to the Last SLIV of any scheduled and/or configured TDRA table row to be an Invalid PDSCH or conflict with a Semi-static UL symbol. It can be understood that the base station avoids the above-mentioned Occasion conflict by implementing the scheduling. The implementation of avoiding the Occasion conflict here can follow a stipulation of the Rel-15 or 16 that, for a PDSCH received by the same UE in the same Serving cell, time domain overlapping is not allowed.

Manner 3: When the quantity of scheduled rows in the row set corresponding to the first occasion is greater than 1, the first operation is performed on the scheduled row in the row set corresponding to the first occasion.

In one implementation: When more than one TDRA table rows corresponding to one Occasion are actually scheduled, the Logical AND operation is uniformly performed for all Valid PDSCHs corresponding to the rows, and a HARQ-ACK bit corresponding to the Occasion is set. At this moment, the UE is allowed to perform Time domain bundling across the TDRA table row based on actual scheduling.

It should be noted that, when a HARQ-ACK codebook is configured to use the time domain bundling for transmission, there is no corresponding solution in some configurations. This leads to the fact that these configurations cannot be actually used and leads to poor configuration flexibility. In addition, in some configurations, a HARQ-ACK feedback granularity is not optimal, which leads to poor PDSCH retransmission performance. For example, for the Type-1 codebook, there is an Occasion conflict problem when the Time domain bundling is configured to be used, and there is no clear solution currently. For the Type-1 codebook in this embodiment of this application, a solution method for the Occasion conflict is introduced, which can ensure consistent processing on both sides of the terminal and the network side device; In some implementations, a case where the quantity of rows of the TDRA table actually scheduled for the same Occasion exceeds 1 is further allowed to enhance scheduling flexibility.

For the Type-2 codebook, when the Time domain bundling is configured to be used, and when dual code word transmission is configured at a higher layer, the Bundling group is divided for each TB (such as a 1st TB or a 2nd TB) based on a Configured SLIV in a related technology, thus affecting a HARQ-ACK feedback granularity and PDSCH retransmission performance. In addition, there is no clear solution for an operation when the Time domain bundling and the Spatial bundling are jointly configured. For the Type-2 codebook in this embodiment of this application, when the Time domain bundling is configured to be used and the dual code word transmission is allowed, a new Bundling group dividing manner is introduced to optimize a HARQ-ACK feedback granularity, to improve PDSCH retransmission performance. The operation is determined when the Time domain bundling and the Spatial bundling are jointly configured, consistent processing on both sides of the terminal and the network side device can be ensured, and configuration flexibility is improved.

It should be noted that, For the network side device, when a codebook of the terminal is configured to use time domain bundling for transmission, when the codebook is a first codebook, at least one of the following may be determined based on scheduling: a quantity of scheduled rows in a row set corresponding to a first occasion is not greater than 1, where the first occasion is any one occasion in an occasion set corresponding to the codebook, and the row set corresponding to the first occasion includes row(s) corresponding to the first occasion in a TDRA table; and a physical downlink shared channel PDSCH corresponding to the last time domain resource assignment record of any scheduled and/or configured row of a time domain resource assignment TDRA table is determined to be a valid PDSCH. When the codebook is a second codebook, at least one of the following may be determined: when spatial bundling is not configured to be used, bundling group(s) is uniformly divided for a plurality of transport blocks TBs, or the bundling group(s) is separately divided for each TB in the plurality of TBs; and when the spatial bundling is configured to be used, the bundling group(s) is divided for all scheduled PDSCHs or all valid PDSCHs scheduled by a piece of downlink control information DCI. The network side device can determine a mapping relationship between a HARQ-ACK bit in the codebook and the scheduled PDSCH based on whether the spatial bundling is configured to be used or not. By determining the operation when the Time domain bundling and the Spatial bundling are jointly configured, consistent processing on both sides of the terminal and the network side device can be ensured, and configuration flexibility can be improved.

As a specific embodiment, the time domain bundling processing method includes:
determining a target operation when the terminal is configured to use time domain bundling for codebook transmission.

When a codebook is a first codebook, the target operation includes at least one of the following:

not expecting that a quantity of scheduled rows in a row set corresponding to a first occasion is greater than 1;
expecting that a physical downlink shared channel PDSCH corresponding to the last time domain resource assignment record of any scheduled and/or configured row of time domain resource assignment TDRA table is a valid PDSCH; and
when the quantity of scheduled rows in the row set corresponding to the first occasion is greater than 1, performing the first operation on the scheduled row in the row set corresponding to the first occasion.

The first occasion is any one occasion in an occasion set corresponding to the codebook, and the row set corresponding to the first occasion includes the row corresponding to the first occasion in the TDRA table.

When the codebook is a second codebook, the target operation includes at least one of the following:

when spatial bundling is not configured to be used, bundling group(s) is uniformly divided for a plurality of transport blocks TBs in a first target dividing manner, or the bundling group(s) is separately divided for each TB in the plurality of TBs in a second target dividing manner; and
when the spatial bundling is configured to be used, the bundling group(s) is divided for all scheduled PDSCHs or all valid PDSCHs scheduled by a piece of downlink control information DCI.

Optionally, the first target dividing manner or the second target dividing manner includes at least one of the following:

a first dividing manner for dividing the bundling group(s) based on PDSCH(s) each of which corresponds to a configured time domain resource assignment record;
a second dividing manner for dividing the bundling group(s) based on PDSCH(s) each of which corresponds to a valid time domain resource assignment record; and

a third dividing manner for dividing the bundling group(s) based on PDSCH(s) each of which corresponds to a valid time domain resource assignment record and has a reference TB enabled.

Optionally, that the separately dividing bundling group(s) for each TB in the plurality of TBs includes:

when a first TB disabling manner is used,
if a first target TB of valid PDSCH(s) scheduled by the DCI is enabled, dividing the bundling group(s) for the first target TB in the first dividing manner or the second dividing manner;
and/or
when a second TB disabling manner is used,
if at least one valid PDSCH scheduled by the DCI has a first target TB enabled, dividing the bundling group(s) for the first target TB in the first dividing manner, the second dividing manner or the third dividing manner, where
the first target TB is any one of the plurality of TBs.

In this embodiment of this application, the terminal determines a target operation when configured to use time domain bundling for codebook transmission. When a codebook is a first codebook, the target operation includes at least one of the following: not expecting that a quantity of scheduled rows in a row set corresponding to a first occasion is greater than 1; expecting that a physical downlink shared channel PDSCH corresponding to the last time domain resource assignment record of any scheduled and/or configured row of a time domain resource assignment TDRA table is a valid PDSCH; and when the quantity of scheduled rows in the row set corresponding to the first occasion is greater than 1, performing a first operation on the scheduled row in the row set corresponding to the first occasion. The first occasion is any one occasion in an occasion set corresponding to the codebook, and the row set corresponding to the first occasion includes row(s) corresponding to the first occasion in the TDRA table. When the codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI. In this way, when the codebook is configured to use the time domain bundling for transmission, an occasion conflict problem can be solved by determining the target operation for the first codebook. When the codebook is configured to use the time domain bundling for transmission, for the second codebook, an operation of dividing the bundling group can be determined by determining the target operation when the time domain bundling and the spatial bundling are jointly configured. Therefore, higher flexibility can be allowed to better match an actual application scenario, configuration flexibility can be improved, and PDSCH retransmission performance can be improved.

Optionally, the uniformly dividing bundling group(s) for a plurality of transport blocks TBs includes any one of the following:

dividing the bundling group(s) based on PDSCH(s) each of which corresponds to a configured time domain resource assignment record or a valid time domain resource assignment record; or
dividing the bundling group(s) based on PDSCH(s) each of which corresponds to a valid time domain resource assignment record and has a reference TB enabled.

The Bundling group can be divided based on a PDSCH corresponding to a Configured SLIV and/or a Valid SLIV, and/or the Bundling group can be divided based on a PDSCH corresponding to the Valid SLIV and enabling the reference TB.

It should be noted that, for the second codebook, when the Time domain bundling is configured to be used and dual code word transmission is allowed, a new Bundling group dividing manner is introduced, so that HARQ-ACK feedback performance can be improved and consistent processing on both sides of the terminal and the network side device can be ensured. For the Type-2 codebook, when the Time domain bundling is configured to be used, and when dual code word transmission is configured at a higher layer, the Bundling group is divided for each TB (such as a 1st TB or a 2nd TB) based on a Configured SLIV in a related technology, thus affecting a HARQ-ACK feedback granularity and PDSCH retransmission performance. The problem above can be solved.

Optionally, the separately dividing bundling group(s) for each TB in the plurality of TBs includes:

when a first TB disabling manner is used,
if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;
and/or
when a second TB disabling manner is used,
if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to a valid time domain resource assignment record and has the first target TB enabled, where

the first target TB is any one of the plurality of TBs.

In addition, for the first target TB, the bundling group(s) divided based on the PDSCH corresponding to the configured time domain resource assignment record or the valid time domain resource assignment record is only used for the first target TB. The first TB disabling manner may be a TB disabling manner 1, and the second TB disabling manner may be a TB disabling manner 2. Therefore, it can be distinguished that the bundling group(s) is separately divided for each of the plurality of TBs in the TB disabling manner.

It should be noted that, for the second codebook, when the Time domain bundling is configured to be used and dual code word transmission is allowed, a new Bundling group dividing manner is introduced in the TB disabling manner, so that HARQ-ACK feedback performance can be improved and consistent processing on both sides of the terminal and the network side device can be ensured. For the Type-2 codebook, when the Time domain bundling is configured to be used, and when dual code word transmission is configured at a higher layer, the Bundling group is divided for each TB (such as a $1^{st}$ TB or a $2^{nd}$ TB) based on a Configured SLIV in a related technology, thus affecting a HARQ-ACK feedback granularity and PDSCH retransmission performance. The problem above can be solved.

Optionally, the method further includes:

when the first TB disabling manner is used, if the first target TB of the valid PDSCH scheduled by the DCI is disabled, a hybrid automatic repeat request acknowledgement HARQ-ACK bit corresponding to the first target TB of the DCI or a downlink assignment index (Downlink assignment index, DAI) is determined as a negative acknowledgement; and/or
when the second TB disabling manner is used, if the first target TB of all valid PDSCHs scheduled by the DCI is disabled, the HARQ-ACK bit corresponding to the first target TB of the DCI or a DAI is determined as a negative acknowledgement.

The negative acknowledgement can be a NACK.

In addition, when the first TB disabling manner is used and the first target TB of each Valid PDSCH scheduled by the DCI is disabled, the HARQ-ACK bit corresponding to the first target TB of the DCI and/or the DAI can be directly set to a NACK. There is no need to divide the Bundling group at this moment. When the second TB disabling manner is used and the first target TB of the Valid PDSCH scheduled by the DCI is disabled, the HARQ-ACK bit corresponding to the first target TB of the DCI and/or the DAI can be directly set to a NACK. There is no need to divide the Bundling group at this moment.

It should be noted that, for the second codebook, when the Time domain bundling is configured to be used and dual code word transmission is allowed, a new Bundling group dividing manner is introduced and setting of the HARQ-ACK bit in all situations is clear, so that HARQ-ACK feedback performance can be improved and consistent processing on both sides of the terminal and the network side device can be ensured.

Optionally, after that a target operation is determined, when the codebook is the second codebook, the method further includes:

when the bundling group(s) is empty or the PDSCH(s) included in the bundling group(s) is invalid PDSCH(s), the HARQ-ACK bit corresponding to the bundling group(s) is determined as a negative acknowledgement;
and/or
when the bundling group(s) includes at least one valid PDSCH,
if the valid PDSCH(s) included in the bundling group(s) has a second target TB disabled, the HARQ-ACK bit of the second target TB of the bundling group(s) is determined as a negative acknowledgement; and/or
if at least one valid PDSCH in the valid PDSCH(s) included in the bundling group(s) has a second target TB enabled, the first operation is uniformly performed based on a decoding result of the second target TB enabled of the at least one valid PDSCH, and the HARQ-ACK bit of the second target TB of the bundling group(s) is determined based on an operation result; or if at least one valid PDSCH in the valid PDSCH(s) included in the bundling group(s) has a second target TB enabled, a decoding result of the second target TB of a valid PDSCH having the second target TB disabled is set to a preset value, the first operation is uniformly performed based on the decoding result of the second target TB of the valid PDSCH(s) included in the bundling group(s), and the HARQ-ACK bit of the second target TB of the bundling group(s) is determined based on an operation result.

The second target TB is any one of TBs configured by a network side.

In addition, if at least one valid PDSCH in the valid PDSCH(s) included in the bundling group(s) has the second target TB enabled and at least one valid PDSCH in the valid PDSCH included in the bundling group(s) has the second target TB disabled, the decoding result of the second target TB of the valid PDSCH having the second target TB disabled may be set to a preset value.

It should be noted that, for the second codebook, when the Time domain bundling is configured to be used and dual code word transmission is allowed, a new Bundling group dividing manner is introduced and setting of the HARQ-ACK bit in all situations is clear, so that HARQ-ACK feedback performance can be improved and consistent processing on both sides of the terminal and the network side device can be ensured.

Optionally, after the bundling group(s) is/are divided based on PDSCH(s) each of which corresponds to a valid time domain resource assignment record and has the first target TB enabled, the method further includes:

> when the bundling group(s) does not include the PDSCH(s) each of which corresponds to the valid time domain resource assignment record and has the first target TB enabled, the HARQ-ACK bit corresponding to the bundling group(s) is determined as a negative acknowledgement;
> and/or
> when the bundling group(s) includes at least one PDSCH each of which corresponds to the valid time domain resource assignment record and has the first target TB enabled:
> the first operation is uniformly performed based on a decoding result of the at least one PDSCH, and the HARQ-ACK bit of the first target TB of the bundling group(s) is determined based on an operation result, or a decoding result of the first target TB of a PDSCH corresponding to the valid time domain resource assignment record and having the first target TB disabled in the bundling group(s) is set to a preset value, the first operation is uniformly performed based on the decoding result of the first target TB of the valid PDSCH included in the bundling group(s), and a HARQ-ACK bit of the first target TB of the bundling group(s) is determined based on the operation result.

The operation result can be an operation result of the first operation. An example is used that the first operation is a Logical AND operation, and the operation result is a result of performing the Logical AND operation.

As a specific embodiment, the second codebook is the Type-2 codebook. For the Type-2 codebook, when dual code word transmission is configured in one Serving cell, the HARQ-ACK bit is set as follows:

When the UE receives one or at least two Valid PDSCHs scheduled by one piece of DCI, for the Time domain bundling, it can be divided into a case (Case) 1 and a Case 2 for corresponding processing based on whether the Spatial Bundling is configured or not.

Case 1: When the Spatial bundling is not configured to be used, any one of a Bundling group dividing manner 1 or a Bundling group dividing manner 2 can be used to determine Bundling group division corresponding to the DCI:

Bundling group dividing manner 1: The Bundling group can be uniformly divided for two TBs. Specifically, any one of a Bundling group dividing manner 1-1 or a Bundling group dividing manner 1-2 can be used.

Bundling group dividing manner 1-1 The Bundling group is divided based on a PDSCH corresponding to a Configured SLIV and/or a Valid SLIV.

During dividing the Bundling group, the division can be performed for all Scheduled PDSCHs or all Valid PDSCHs scheduled by the DCI.

For one Bundling group and one TB, the HARQ-ACK bit can be configured in at least one of a setting manner 1 and a setting manner 2.

Setting manner 1 When the Bundling group is empty or includes only an Invalid PDSCH, the HARQ-ACK bit corresponding to the TB and the Bundling group in the HARQ-ACK codebook is set to a NACK. It can be understood that, when the Bundling group is divided based on the PDSCH corresponding to the Valid SLIV, it will not happen that one Bundling group includes or only includes the Invalid PDSCH. Because, at this moment, the Invalid PDSCH is ignored when the Bundling group is divided, there is no mapping relationship between the Invalid PDSCH and the Bundling group.

Setting manner 2 When the Bundling group includes at least one Valid PDSCH,

> when all Valid PDSCHs have the TB disabled, the HARQ-ACK bit corresponding to the TB and the Bundling group in the HARQ-ACK codebook can be directly set to a NACK; or
> when at least one Valid PDSCH has the TB enabled, the HARQ-ACK bit can be configured in any one of a setting manner 2-1 and a setting manner 2-2.

Setting manner 2-1 The Logical AND operation is uniformly performed only based on the decoding result of the TB of each Valid PDSCH having the TB enabled, and the HARQ-ACK bit corresponding to the TB and the Bundling group in the HARQ-ACK codebook is set based on the operation result.

Setting manner 2-2 The Logical AND operation is uniformly performed based on the decoding result of the TB of each Valid PDSCH, and the HARQ-ACK bit corresponding to the TB and the Bundling group in the HARQ-ACK codebook is set based on the operation result, and the decoding result of the TB of each Valid PDSCH having the TB disabled is assumed to be a predefined value, such as an ACK, before the Logical AND operation.

Bundling group dividing manner 1-2 The Bundling group is divided based on the PDSCH corresponding to the Valid SLIV and enabling the reference TB.

Bundling group dividing method 2 The Bundling group is separately divided for each TB.

The division of the Bundling group can be separately determined for each TB. When the division of the Bundling group is determined for one TB, the TB is referred to as a designated TB in the following descriptions.

It can be separately described in a Case 3-1 and a Case 3-2 based on the used TB disabling manner.

Case 3-1 When the TB disabling manner 1 is used,

a designated TB of each Valid PDSCH scheduled by the DCI is either enabled or disabled.

When the designated TB of each Valid PDSCH scheduled by the DCI is enabled, the Bundling group(s) can be divided based on PDSCH(s) each of which corresponds to the Configured SLIV or the Valid SLIV, and an operation of setting a HARQ-ACK bit is performed in the Bundling group dividing manner 1-1 can be used for each Bundling group and the designated TB. It can be understood that, when the Bundling group is divided based on the PDSCH corresponding to the Valid SLIV, it will not happen that one Bundling group includes or only includes the Invalid PDSCH. Because, at this moment, the Invalid PDSCH is ignored when the Bundling group is divided, there is no mapping relationship between the Invalid PDSCH and the Bundling group.

When the designated TB of each Valid PDSCH scheduled by the DCI is disabled, the HARQ-ACK bit corresponding to the designated TB of the DCI and/or the DAI can be directly set to a NACK. There is no need to divide the Bundling group at this moment.

Case 3-2 When the TB disabling manner 2 is used:

When the Valid PDSCH scheduled by the DCI has the designated TB disabled, the HARQ-ACK bit corresponding to the designated TB of the DCI and/or the DAI can be directly set to a NACK. There is no need to divide the Bundling group at this moment.

When at least one Valid PDSCH scheduled by the DCI has the designated TB enabled, any one of Bundling group dividing manner 2-1 and Bundling group dividing manner 2-2 can be used.

Bundling group dividing manner 2-1 The Bundling group is divided based on the PDSCH corresponding to the Configured SLIV/Valid SLIV.

Bundling group dividing manner 2-2 The Bundling group is divided based on the PDSCH corresponding to the Valid SLIV and enabling the designated TB.

For the above Bundling group dividing manner 2-1, the Bundling group division of two TBs is completely consistent, and an operation of setting a HARQ-ACK bit is performed in the Bundling group dividing manner 1-1 can be used for each Bundling group and the designated TB.

For the Bundling group dividing manner 2-2, when at least one Valid PDSCH has the designated TB enabled, the Bundling group dividing manner can follow the existing operation. All scheduled PDSCHs, corresponding to all Valid SLIVs and enabling the designated TB, scheduled by the DCI, are divided, to be specific, all the scheduled PDSCHs, corresponding to the Valid SLIV and enabling the designated TB, scheduled by the DCI, are used as a given PDSCH set to divide the Bundling group. An operation of setting a HARQ-ACK bit is performed in the Bundling group dividing manner 1-1 can be used for each Bundling group and the designated TB.

It should be noted that, existing operations for the Bundling group dividing manner include: It is assumed that a given PDSCH set includes a total of C PDSCHs (C>0), which are arranged in a predefined order (for example, arranged based on an order in which SLIVs corresponding to each PDSCH are arranged in a TDRA table row, or arranged based on an order in which each PDSCH is arranged in time domain). It is assumed that a quantity of bundling groups configured at a higher layer is N, the UE can determine a quantity M of bundling groups divided by the PDSCH set according to the following formula: $M = \min(N,C)$. Definition: $M_1 = \mathrm{mod}(C,M)$,

$$K_1 = \left\lceil \frac{C}{M} \right\rceil, \text{ and } K_2 = \left\lfloor \frac{C}{M} \right\rfloor.$$ If $M_1 > 0$, the bundling group m, $m = 0,1,...,M_1 -1$, includes PDSCHs whose indexes respectively are $m \cdot K_1 + k, k = 0,1,...,K_1 -1$. The Bundling Group m, $m = M_1, M_1 +1,...,M-1$, includes PDSCHs whose indexes respectively are $M_1 \cdot K_1 + (m-M_1) \cdot K_2 + k, k = 0,1,...,K_2 -1$

In one embodiment, after the bundling group is divided based on the PDSCH corresponding to the Valid SLIV and having the designated TB enabled:

> when the bundling group does not include the PDSCH corresponding to the valid SLIV and having the designated TB enabled, the HARQ-ACK bit corresponding to the bundling group is set as a negative acknowledgement;
> and/or
> when the bundling group includes at least one PDSCH corresponding to the valid SLIV and having the designated TB enabled,
> a Logical AND operation is uniformly performed based on a decoding result of the at least one PDSCH, and a HARQ-ACK bit of the designated TB of the bundling group is set based on an operation result; or a decoding result of the designated TB of a PDSCH corresponding to the valid SLIV and having the designated TB disabled in the bundling group is set to a preset value, the Logical AND operation is uniformly performed based on the decoding result of the designated TB of the valid PDSCH included in the bundling group, and the HARQ-ACK bit of the designated TB of the bundling group is set based on an operation result.

Case 2 When the Spatial bundling is configured to be used,

the Bundling group can be divided for all Scheduled PDSCHs or all Valid PDSCHs scheduled by the DCI, and the Bundling group dividing manner can follow the existing operation, to be specific, all the Scheduled PDSCHs or all the Valid PDSCHs scheduled by the DCI are used as a given PDSCH set to divide the Bundling group.

For one Bundling group, the HARQ-ACK bit can be configured in at least one of a setting manner 3 and a setting manner 4.

Setting manner 3 When the Bundling group is empty or includes only the Invalid PDSCH, the HARQ-ACK bit corresponding to the Bundling group in the HARQ-ACK codebook is set to a NACK.

It can be understood that, when the Bundling group is divided based on the Valid PDSCH, it will not happen that one Bundling group includes or only includes the Invalid PDSCH. Because, at this moment, the Invalid PDSCH is ignored when the Bundling group is divided, there is no mapping relationship between the Invalid PDSCH and the Bundling group.

Setting manner 4 When the Bundling group includes at least one Valid PDSCH, the HARQ-ACK bit can be configured in any one of a setting manner 4-1 and a setting manner 4-2.

Setting manner 4-1 The Logical AND operation is uniformly performed based on a decoding result of a TB (one TB or two TB) enabled of each Valid PDSCH, and a HARQ-ACK bit corresponding to the Bundling group in the HARQ-ACK codebook is set based on an operation result.

Setting manner 4-2 The Logical AND operation is uniformly performed based on decoding results of TBs (two TBs) configured by each Valid PDSCH, and a HARQ-ACK bit corresponding to the Bundling group in the HARQ-ACK codebook is set based on operation results. The decoding result of each TB disabled of Valid PDSCH is assumed to be a predefined value, such as an ACK, before the Logical AND operation.

Optionally, before the dividing the bundling group(s) based on PDSCH(s) each of which corresponds to a valid time domain resource assignment record and has a reference TB enabled, the method further includes:

the reference TB is determined, where
the reference TB is any one of the following:
a first TB, a second TB, a TB mapped to a code word CW0 or a code word CW1, a $1^{st}$ enabled TB, and a third target TB.

The third target TB is a TB with a maximum quantity of valid PDSCHs for enabling the third target TB.

CW is a code word (Code Word). The first TB may be TB1 and the second TB may be TB2. The reference TB can be separately determined in a Case 4-1 and a Case 4-2 divided based on the used TB disabling manner.

Case 4-1 When the TB disabling manner 1 is used, any one of a reference TB determining manner 1-1 and a reference TB determining manner 1-2 can be used.

Reference TB determining manner 1-1 TB1 or TB2 can be used; a TB mapped to CW0 or CW1 is used; or it can be configured by using a higher layer parameter or specified according to protocols.

Reference TB determining manner 1-2 The $1^{st}$ TB that is enabled is used.

Case 4-2 When the TB disabling manner 2 is used, any one of a reference TB determining manner 2-1 and a reference TB determining manner 2-2 can be used.

Reference TB determining manner 2-1 TB1 or TB2 can be used; the TB mapped to CW0 or CW1 is used; or it can be configured by using a higher layer parameter or specified according to protocols.

Reference TB determining manner 2-2 A quantity of Valid PDSCHs enabling the TB can be separately determined for each TB, and a TB with a more quantity of Valid PDSCHs is used. When there are two TBs with the same quantity, an agreed TB can be used, for example, TB1.

It can be understood that, for the TB mapped to CW0 in the reference TB determining manner 1-1 and the reference TB determining manner 2-1, or the reference TB determining manner 1-2, the actual operation is exactly the same as the way of dividing the Bundling group(s) based on PDSCH(s) each of which corresponds to the Valid SLIV in the Bundling group dividing manner 1-1. Because any Valid PDSCH must has at least one TB enabled, and the TB mapped to CW0 must be enabled, another option may cause the division of the Bundling group to ignore a scheduling situation of a TB not selected as the reference TB, thus causing a loss of HARQ-ACK information. These options listed here can ensure completeness.

Optionally, when the codebook is the first codebook and dual code word transmission is not configured to be allowed in a serving cell, the method further includes at least one of the following:

if the valid PDSCH associated with the first occasion is scheduled by a single piece of DCI, the first operation is uniformly performed based on a decoding result of the valid PDSCH associated with the first occasion, and a HARQ-ACK bit corresponding to the first occasion is determined based on an operation result; and
if the valid PDSCH associated with the first occasion is scheduled by at least two pieces of DCI, the first operation is uniformly performed based on a decoding result of the valid PDSCH scheduled by any one of the at least two pieces of DCI, and a HARQ-ACK bit corresponding to the first occasion is determined based on an operation result.

In one embodiment, the first codebook is a Type-1 codebook, and for the Type-1 codebook, the HARQ-ACK bit can be set as follows:
for one Occasion of one Serving cell, it is assumed that the UE receives at least one associated Valid PDSCH. These associated Valid PDSCHs may be scheduled by a single piece of DCI or by more than one piece of DCI, and each piece of DCI schedules and/or indicates only one row in the TDRA table.

When the dual code word transmission is not configured for the Serving cell, the HARQ-ACK bit can be set in at least one of a setting manner 5 and a setting manner 6.

Setting manner 5 When the Valid PDSCH associated with the Occasion is scheduled by a single piece of DCI, a Logical AND operation is uniformly performed based on a decoding result of each Valid PDSCH, and a HARQ-ACK bit corresponding to the Occasion is set. For example, the Logical AND operation may be uniformly performed based on a decoding result of a $1^{st}$ TB of each Valid PDSCH, and the HARQ-ACK bit corresponding to the Occasion may be set.

Setting manner 6 When the Valid PDSCH associated with the Occasion is scheduled by at least two pieces of DCI, the Logical AND operation is uniformly performed based on a decoding result of each Valid PDSCH scheduled by any one piece of DCI of the at least two pieces of DCI, and the HARQ-ACK bit corresponding to the Occasion is set. For example, the Logical AND operation may be uniformly performed based on a decoding result of a $1^{st}$ TB of each Valid PDSCH scheduled by any one piece of DCI of the at least two pieces of DCI, and the HARQ-ACK bit corresponding to the Occasion may be set.

In this embodiment, when the codebook is the first codebook and the dual code word transmission is not configured to be allowed in the serving cell, HARQ-ACK bit setting is determined, so that consistent processing on both sides of the terminal and the network side device can be ensured.

Optionally, when the codebook is the first codebook and dual code word transmission is configured to be allowed in a serving cell, the method further includes at least one of the following:

if the spatial bundling is not configured to be used, a HARQ-ACK bit is determined in a TB disabling manner; and
if the spatial bundling is configured to be used, a HARQ-ACK bit is determined based on the DCI corresponding to the valid PDSCH associated with the first occasion.

Optionally, when a first TB disabling manner is used and the valid PDSCH associated with the first occasion is scheduled by at least two pieces of DCI, that a HARQ-ACK bit is determined in a TB disabling manner includes at least one of the following:

if the at least two pieces of DCI both enable a fourth target TB, the first operation is uniformly performed based on a decoding result of the fourth target TB of a valid PDSCH scheduled by target DCI, and the HARQ-ACK bit corresponding to the fourth target TB is determined based on an operation result, where the target DCI is any one of the at least two pieces of DCI;
if the at least two pieces of DCI both disable a fourth target TB, the HARQ-ACK bit corresponding to the fourth target TB of the first occasion is determined as a negative acknowledgement; and
if at least one piece of DCI in the at least two pieces of DCI enables a fourth target TB and at least one piece of DCI disables the fourth target TB, the first operation is uniformly performed based on a decoding result of the fourth target TB of a valid PDSCH scheduled by any one piece of DCI in the DCI enabling the fourth target TB, and the HARQ-ACK bit corresponding to the fourth target TB of the first occasion is determined based on an operation result; or if at least one piece of DCI in the at least two pieces of DCI enables a fourth target TB and at least one piece of DCI disables the fourth target TB, a decoding result of the fourth target TB of a valid PDSCH scheduled by any one piece of DCI in the DCI disabling the fourth target TB is set to a preset value, the first operation is uniformly performed based on the decoding result of the fourth target TB of a valid PDSCH scheduled by any one piece of DCI in the at least two pieces of DCI, and the HARQ-ACK bit corresponding to the fourth target TB of the first occasion is determined based on an operation result.

The fourth target TB is any one of TBs configured by a network side.

In addition, if at least one piece of DCI of the at least two pieces of DCI enables the fourth target TB and at least one piece of DCI of the at least two pieces of DCI disables the fourth target TB, the decoding result of the fourth target TB of the valid PDSCH scheduled by any one piece of DCI of the DCI disabling the fourth target TB may be set to a preset value.

In addition, when the network side device configures to allow dual code word transmission for the serving cell, the network side device configures two TBs for the terminal, to be specific, the two TBs are configured for the serving cell of the terminal. At this moment, the scheduling DCI of the PDSCH for the terminal can separately indicates a corresponding modulation and coding scheme (Modulation and coding scheme, MCS), a new data indicator (New data indicator, NDI) and a redundancy version (Redundancy version, RV), or other information, for a $1^{st}$ TB (or TB1) and a $2^{nd}$ TB (or TB2), and a single piece of PDSCH transmission can carry at most two TBs. Correspondingly, when HARQ-ACK information is fed back, if the spatial bundling is not configured, the $1^{st}$ TB and the $2^{nd}$ TB can be distinguished to respectively feed back a corresponding HARQ-ACK. For example, when the time domain bundling is not configured, the corresponding HARQ-ACK can be respectively fed back to the $1^{st}$ Valid TB and the $2^{nd}$ Valid TB. When the time domain bundling is configured, for the second codebook, if a bundling group is uniformly divided for the two TBs, a corresponding HARQ-ACK can be respectively fed back to the $1^{st}$ TB and the $2^{nd}$ TB of one divided bundling group. If the bundling group is respectively divided for each TB, one divided bundling group only corresponds to one of the 1st TB and the 2nd TB, and the corresponding HARQ-ACK can be fed back to the TB corresponding to the bundling group.

Optionally, when a second TB disabling manner is used, that a HARQ-ACK bit is determined in a TB disabling manner includes at least one of the following:

if a fifth target TB of the valid PDSCH associated with the first occasion is disabled, the HARQ-ACK bit corresponding to the fifth target TB of the first occasion is determined as a negative acknowledgement; and

if at least one PDSCH in the valid PDSCH associated with the first occasion has a fifth target TB enabled, the first operation is uniformly performed based on a decoding result of the fifth target TB of the valid PDSCH having the fifth target TB enabled, and the HARQ-ACK bit corresponding to the fifth target TB of the first occasion is determined based on an operation result; or if at least one PDSCH in the valid PDSCH associated with the first occasion has a fifth target TB enabled, a decoding result of the fifth target TB of the valid PDSCH having the fifth target TB disabled is set to a preset value, the first operation is uniformly performed based on the decoding result of the fifth target TB of the valid PDSCH associated with the first occasion, and the HARQ-ACK bit corresponding to the fifth target TB of the first occasion is determined based on an operation result.

The fifth target TB is any one of TBs configured by a network side.

In addition, if at least one PDSCH in the valid PDSCH associated with the first occasion has the fifth target TB enabled and at least one PDSCH the valid PDSCH associated with the first occasion has the fifth target TB disabled, a decoding result of the fifth target TB of the valid PDSCH having the fifth target TB disabled may be set to a preset value.

Optionally, that a HARQ-ACK bit is determined based on the DCI corresponding to the valid PDSCH associated with the first occasion includes:

when a quantity of pieces of DCI scheduling the valid PDSCH associated with the first occasion is one:

the first operation is uniformly performed based on decoding results of all enabled TBs of the valid PDSCH scheduled by the DCI, and the HARQ-ACK bit corresponding to the first occasion is determined based on an operation result, or a decoding result of a TB disabled of the valid PDSCH is set to a preset value, the first operation is uniformly performed based on decoding results of all configured TBs of the valid PDSCH scheduled by the DCI, and the HARQ-ACK bit corresponding to the first occasion is determined based on an operation result; and/or

when a quantity of pieces of DCI scheduling the valid PDSCH associated with the first occasion is at least two:

the first operation is uniformly performed based on a decoding result of all enabled TBs of a valid PDSCH scheduled by target DCI, and the HARQ-ACK bit corresponding to the first occasion is determined based on an operation result, or a decoding result of a TB disabled of the valid PDSCH is set to a preset value, the first operation is uniformly performed based on decoding results of all configured TBs of the valid PDSCH scheduled by the target DCI, and the HARQ-ACK bit corresponding to the first occasion is determined based on an operation result, where the target DCI is any one of the at least two pieces of DCI.

When two TBs are configured by the network side, each valid PDSCH is also configured with two TBs, that is, each valid PDSCH can carry at most two TBs, and an actual quantity of TBs carried by one valid PDSCH can be determined to be one or two based on indication information in corresponding scheduling DCI and the used TB disabling manner.

As a specific embodiment, the first codebook is a Type-1 codebook, and for the Type-1 codebook, the HARQ-ACK bit can be set as follows:

For one Occasion of one Serving cell, it is assumed that the UE receives at least one associated Valid PDSCH. These associated Valid PDSCHs may be scheduled by one single piece of DCI or by more than one piece of DCI, and each piece of DCI schedules and/or indicates only one row in the TDRA table.

When dual code word transmission is configured to be allowed for the Serving cell, it can be separately described in two cases: a Case 5 and a Case 6 based on whether the spatial bundling (Spatial Bundling) is configured or not.

Case 5 When the Spatial bundling is not configured to be used,

for one TB (called a designated TB for convenience of description), for example, the TB may be a 1st TB or a 2nd TB, and it can be divided into two cases: a Case 5-1 and a Case 5-2 based on the used TB disabling manner.

Case 5-1 When the TB disabling manner 1 is used,

it can be further divided into a Case 5-1-1 and a Case 5-1-2 for corresponding processing.

Case 5-1-1 When the Valid PDSCH associated with the Occasion is scheduled by a single piece of DCI, a designated TB of the Valid PDSCH associated with the Occasion is enabled or disabled.

When the designated TB is enabled, a Logical AND operation can be uniformly performed based on a decoding result of the designated TB of each Valid PDSCH, and a HARQ-ACK bit corresponding to the designated TB of the Occasion can be set.

When the designated TB is disabled, the HARQ-ACK bit corresponding to the designated TB of the Occasion can be directly set to a NACK.

Case 5-1-2 When the Valid PDSCH associated with the Occasion is scheduled by at least two pieces of DCI, the designated TB of the Valid PDSCH scheduled by each DCI is enabled or disabled, but different pieces of DCI can independently set an enabled or a disabled state for the designated TB.

When the at least two pieces of DCI enable the designated TB, the Logical AND operation is uniformly performed based on a decoding result of the designated TB of each Valid PDSCH scheduled by any one piece of DCI in the at least two pieces of DCI, and a HARQ-ACK bit corresponding to the designated TB of the Occasion is set.

When the at least two pieces of DCI disable the designated TB, the HARQ-ACK bit corresponding to the designated TB of the Occasion can be directly set to a NACK.

When at least one piece of DCI in the at least two pieces of DCI enables the designated TB and at least one piece of DCI disables the designated TB, the HARQ-ACK bit can be set in any one of a setting manner 7 and a setting manner 8.

Setting manner 7 The Logical AND operation is uniformly performed only based on the decoding result of the designated TB of each Valid PDSCH (involving at least one Valid PDSCH) scheduled by any one piece of DCI of at least one piece of DCI enabling the designated TB, and the HARQ-ACK bit corresponding to the designated TB of the Occasion is set.

Setting manner 8 The Logical AND operation is uniformly performed based on the decoding result of the designated TB of each Valid PDSCH scheduled by any one piece of DCI in the at least two pieces of DCI, and the HARQ-ACK bit corresponding to the designated TB of the Occasion is set. Before the Logical AND operation is performed, the decoding result of the designated TB of each Valid PDSCH scheduled by any one piece of DCI in at least one piece of DCI disabling the designated TB is assumed to be a predefined value, such as an ACK.

Case 5-2 When the TB disabling manner 2 is used:

For an associated Valid PDSCH set, a Valid PDSCH in the Valid PDSCH set may be scheduled by a single piece of DCI or by at least two pieces of DCI. The designated TB of each Valid PDSCH is enabled or disabled, and an enabled or a disabled state of designated TBs of different Valid PDSCHs can be independently set.

When the Valid PDSCH in the Valid PDSCH set has the designated TB disabled, the HARQ-ACK bit corresponding to the designated TB of the Occasion can be directly set to a NACK.

When at least one Valid PDSCH in the Valid PDSCH set has the designated TB enabled, the HARQ-ACK bit can be set in any one of a setting manner 9 and a setting manner 10.

Setting manner 9 The Logical AND operation is uniformly performed only based on the decoding result of the designated TB of each Valid PDSCH having the designated TB enabled, and the HARQ-ACK bit corresponding to the designated TB of the Occasion is set.

Setting manner 10 The Logical AND operation is uniformly performed based on the decoding result of the designated TB of each Valid PDSCH, and the HARQ-ACK bit corresponding to the designated TB of the Occasion is set, Before the Logical AND operation is performed, the decoding result of the designated TB of each Valid PDSCH having the designated TB disabled is assumed to be a predefined value, such as an ACK.

Case 6 When the Spatial bundling is configured to be used,

it can be further divided into a Case 6-1 and a Case 6-2 for corresponding processing.

Case 6-1 When the Valid PDSCH associated with the Occasion is scheduled by a single piece of DCI, the HARQ-ACK bit can be set in any one of a setting manner 11 or a setting manner 12.

Setting manner 11 The Logical AND operation is uniformly performed based on a decoding result of a TB enabled of each Valid PDSCH scheduled by the DCI, and the HARQ-ACK bit corresponding to the Occasion is set. For example, the Logical AND operation may be uniformly performed based on the decoding result of one or two TBs enabled of each Valid PDSCH scheduled by the DCI, and the HARQ-ACK bit corresponding to the Occasion may be set.

Setting manner 12 The Logical AND operation is uniformly performed based on a decoding result of a TB configured by each Valid PDSCH scheduled by the DCI, and the HARQ-ACK bit corresponding to the Occasion is set. Before the Logical AND operation is performed, the decoding result of the TB disabled of each Valid PDSCH is assumed to be a predefined value, such as an ACK. For example, the decoding result of the TB disabled of each Valid PDSCH is assumed to be an ACK, the Logical AND operation may be uniformly performed based on decoding results of two TBs configured by each Valid PDSCH scheduled by the DCI, and the HARQ-ACK bit corresponding to the Occasion may be set.

Case 6-2 When the Valid PDSCH associated with the Occasion is scheduled by at least two pieces of DCI, the HARQ-ACK bit can be set in any one of a setting manner 13 or a setting manner 14.

Setting manner 13 The Logical AND operation is uniformly performed based on a decoding result of a TB enabled of each Valid PDSCH scheduled by any one piece of DCI of the at least two pieces of DCI, and the HARQ-ACK bit corresponding to the Occasion is set. For example, the Logical AND operation may be uniformly performed based on decoding results of one or two TBs enabled of each Valid PDSCH scheduled by any one of the at least two pieces of DCI, and the HARQ-ACK bit corresponding to the Occasion may be set.

Setting manner 14 The Logical AND operation is uniformly performed based on a decoding result of a TB enabled of each Valid PDSCH scheduled by any one piece of DCI of the at least two pieces of DCI, and the HARQ-ACK bit corresponding to the Occasion is set. Before the Logical AND operation is performed, the decoding result of the TB disabled of each Valid PDSCH is assumed to be a predefined value, such as an ACK. For example, the decoding result of the TB disabled of each Valid PDSCH is assumed to be an ACK, the Logical AND operation may be uniformly performed based on decoding results of two TBs configured by each Valid PDSCH scheduled by any one of the at least two pieces of DCI, and the HARQ-ACK bit corresponding to the Occasion may be set.

It should be noted that, for one Occasion, when the UE does not receive any associated Valid PDSCH, the HARQ-ACK bit corresponding to the Occasion in the Type-1 codebook can be directly set to a NACK. For example, when the Spatial bundling is not configured to be used, the HARQ-ACK bit corresponding to the Occasion and any TB is set to a NACK. When the Spatial bundling is configured to be used, the HARQ-ACK bit corresponding to the Occasion is set to a NACK, and the HARQ-ACK bit does not distinguish the TB at this moment.

In this embodiment, when the codebook is the first codebook and the dual code word transmission is configured to be allowed in the serving cell, HARQ-ACK bit setting is determined, so that consistent processing on both sides of the terminal and the network side device can be ensured.

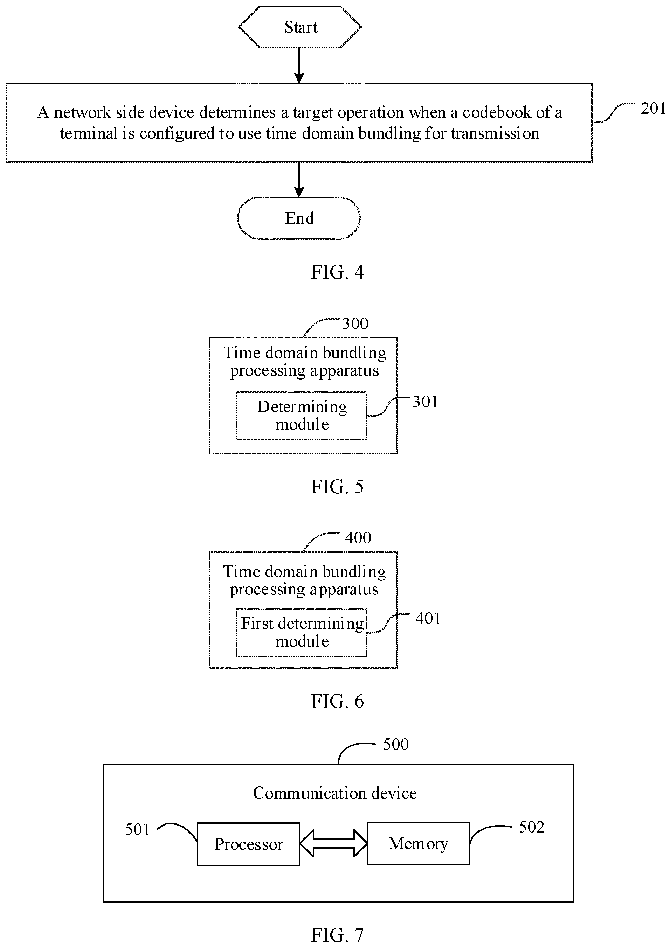

FIG. 4 is a flowchart 2 of a time domain bundling processing method according to an embodiment of this application. As shown in FIG. 4, the time domain bundling processing method includes the following steps.

Step 201: A network side device determines a target operation when a codebook of a terminal is configured to use time domain bundling for transmission.

When the codebook is a first codebook, the target operation includes at least one of the following:

    a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table; and
    determining that a physical downlink shared channel PDSCH corresponding to the last time domain resource assignment record of any scheduled and/or configured row of a time domain resource assignment TDRA table is a valid PDSCH.

When the codebook is a second codebook, the target operation includes at least one of the following:

    in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

Optionally, the uniformly dividing bundling group(s) for a plurality of transport blocks TBs includes any one of the following:

    dividing the bundling group(s) based on PDSCH(s) each of which corresponds to a configured time domain resource assignment record or a valid time domain resource assignment record; or
    dividing the bundling group(s) based on PDSCH(s) each of which corresponds to a valid time domain resource assignment record and has a reference TB enabled.

Optionally, the separately dividing bundling group(s) for each TB in the plurality of TBs includes:
when a first TB disabling manner is used:

    if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;
    and/or
    when a second TB disabling manner is used:

        if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to a valid time domain resource assignment record and has the first target TB enabled, where the first target TB is any one of the plurality of TBs.

Optionally, after that a target operation is determined, the method further includes:
determining, by the network side device, a mapping relationship between a HARQ-ACK bit in the codebook and the scheduled PDSCH based on whether the spatial bundling is configured to be used or not.

It should be noted that, based on the mapping relationship between the HARQ-ACK bit and the scheduled PDSCH, the network side device may determine a length of a HARQ-ACK codebook (namely, a quantity of HARQ-ACK bits included), receive the HARQ-ACK codebook sent by the terminal based on the length, obtain HARQ-ACK information corresponding to each scheduled PDSCH based on a value of each HARQ-ACK bit in the HARQ-ACK codebook, and further perform retransmission scheduling based on the need and based on the HARQ-ACK information.

It should be noted that, it should be noted that this embodiment is an implementation of the corresponding network side device in the embodiment shown in FIG. 2. For a specific implementation, refer to related descriptions in the embodiment shown in FIG. 2. To avoid repeated descriptions, details are not described again in this embodiment. In this embodiment, when the codebook is configured to use the time domain bundling for transmission, an occasion conflict problem can be solved by determining the target operation for the first codebook. When the codebook is configured to use the time domain bundling for transmission, for the second codebook, a division operation of the bundling group can be determined by determining the target operation when the time domain bundling and the spatial bundling are jointly configured. Therefore, higher flexibility can be allowed to better match an actual application scenario, configuration flexibility can be improved, and PDSCH retransmission performance can be improved.

In the time domain bundling processing method provided in this embodiment of this application, an executing body can be a time domain bundling processing apparatus. In this embodiment of this application, an example is used in which the time domain bundling processing apparatus performs the time domain bundling processing method, to explain the time domain bundling processing apparatus provided by this embodiment of this application.

FIG. 5 is a diagram of a structure of a time domain bundling processing apparatus according to an embodiment of this application. As shown in FIG. 5, the time domain bundling processing apparatus 300 includes:

a determining module 301, configured to determine a target operation when configured to use time domain bundling for codebook transmission.

When a codebook is a first codebook, the target operation includes at least one of the following:

> not expecting that a quantity of scheduled rows in a row set corresponding to a first occasion is greater than 1;
> expecting that a physical downlink shared channel PDSCH corresponding to the last time domain resource assignment record of any scheduled and/or configured row of a time domain resource assignment TDRA table is a valid PDSCH; and
> when the quantity of scheduled rows in the row set corresponding to the first occasion is greater than 1, performing a first operation on the scheduled row in the row set corresponding to the first occasion.

The first occasion is any one occasion in an occasion set corresponding to the codebook, and the row set corresponding to the first occasion includes row(s) corresponding to the first occasion in the TDRA table.

When a codebook is a second codebook, the target operation includes at least one of the following:

> in a case that spatial bundling is not configured to be used, uniformly dividing bundling group(s) for a plurality of transport blocks TBs, or separately dividing bundling group(s) for each TB in the plurality of TBs; and
> in a case that the spatial bundling is configured to be used, dividing bundling group(s) for all scheduled PDSCHs or all valid PDSCHs scheduled by a piece of downlink control information DCI.

Optionally, when the codebook is the second codebook and the spatial bundling is not configured to be used, the target operation includes any one of the following:

> dividing the bundling group(s) based on PDSCH(s) each of which corresponds to a configured time domain resource assignment record or a valid time domain resource assignment record; or
> dividing the bundling group(s) based on PDSCH(s) each of which corresponds to a valid time domain resource assignment record and has a reference TB enabled.

Optionally, when the codebook is the second codebook and the spatial bundling is not configured to be used, the target operation includes:

when a first TB disabling manner is used:

> if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;

and/or

when a second TB disabling manner is used:

> if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to the valid time domain resource assignment record and has the first target TB enabled, where the first target TB is any one of the plurality of TBs.

Optionally, the apparatus further includes:

a first setting module, configured to:

when the first TB disabling manner is used:

if the first target TB of the valid PDSCH scheduled by the DCI is disabled, determine a hybrid automatic repeat request acknowledgement HARQ-ACK bit corresponding to the first target TB of the DCI or a downlink assignment index DAI as a negative acknowledgement;

and/or

when the second TB disabling manner is used:

if the first target TB of all the valid PDSCHs scheduled by the DCI is disabled, determine a HARQ-ACK bit corresponding to the first target TB of the DCI or a DAI as a negative acknowledgement.

Optionally, when the codebook is the second codebook, the apparatus further includes:
a second configuration module, configured to:

when the bundling group(s) is empty or the PDSCH(s) included in the bundling group(s) is invalid PDSCH(s), determine the HARQ-ACK bit corresponding to the bundling group(s) as a negative acknowledgement;

and/or

when the bundling group(s) includes at least one valid PDSCH,

if the valid PDSCH(s) included in the bundling group(s) has a second target TB disabled, determine the HARQ-ACK bit of the second target TB of the bundling group(s) as a negative acknowledgement;

and/or

if at least one valid PDSCH(s) in the valid PDSCH included in the bundling group(s) has a second target TB enabled, uniformly perform the first operation based on a decoding result of the second target TB enabled of the at least one valid PDSCH, and determine the HARQ-ACK bit of the second target TB of the bundling group(s) based on an operation result; or if at least one valid PDSCH(s) in the valid PDSCH included in the bundling group(s) has a second target TB enabled, set a decoding result of the second target TB of a valid PDSCH having the second target TB disabled to a preset value, uniformly perform the first operation based on the decoding result of the second target TB of the valid PDSCH(s) included in the bundling group(s), and determine the HARQ-ACK bit of the second target TB of the bundling group(s) based on an operation result.

The second target TB is any one of TBs configured by a network side.

Optionally, the apparatus further includes:
a third configuration module, configured to:

when the bundling group(s) does not include the PDSCH corresponding to the valid time domain resource assignment record and having the first target TB enabled, determine a HARQ-ACK bit corresponding to the bundling group(s) as a negative acknowledgement;

and/or

when the bundling group(s) includes at least one PDSCH each of which corresponds to the valid time domain resource assignment record and having the first target TB enabled,

uniformly perform the first operation based on a decoding result of the at least one PDSCH, and determine a HARQ-ACK bit of the first target TB of the bundling group(s) based on an operation result, or set a decoding result of the first target TB of a PDSCH corresponding to the valid time domain resource assignment record and having the first target TB disabled in the bundling group(s) to a preset value, uniformly perform the first operation based on the decoding result of the first target TB of the valid PDSCH included in the bundling group(s), and determine a HARQ-ACK bit of the first target TB of the bundling group(s) based on the operation result.

Optionally, the target operation further includes:

the reference TB is determined, where
the reference TB is any one of the following:
a first TB, a second TB, a TB mapped to a code word CW0 or a code word CW1, a $1^{st}$ enabled TB, and a third target TB.

The third target TB is a TB with a maximum quantity of valid PDSCHs for enabling the third target TB.

Optionally, the apparatus further includes:
a fourth setting module, configured for at least one of the following, when the codebook is the first codebook and dual code word transmission is not configured to be allowed in a serving cell:

if the valid PDSCH associated with the first occasion is scheduled by a single piece of DCI, uniformly performing the first operation based on a decoding result of the valid PDSCH associated with the first occasion, and determining a HARQ-ACK bit corresponding to the first occasion based on the operation result; and

if the valid PDSCH associated with the first occasion is scheduled by at least two pieces of DCI, uniformly performing the first operation based on a decoding result of the valid PDSCH scheduled by any one of the at least two pieces of DCI, and determining a HARQ-ACK bit corresponding to the first occasion based on an operation result.

Optionally, the apparatus further includes:
a fifth setting module, configured for at least one of the following, when the codebook is the first codebook and dual code word transmission is configured to be allowed in a serving cell:

if the spatial bundling is not configured to be used, determining a HARQ-ACK bit in a TB disabling manner; and

if the spatial bundling is configured to be used, determining a HARQ-ACK bit based on the DCI corresponding to the valid PDSCH associated with the first occasion.

Optionally, when a first TB disabling manner is used and the valid PDSCH associated with the first occasion is scheduled by at least two pieces of DCI, the fifth setting module is configured for at least one of the following:

if the at least two pieces of DCI both enable a fourth target TB, uniformly performing the first operation based on a decoding result of the fourth target TB of a valid PDSCH scheduled by target DCI, and determining the HARQ-ACK bit corresponding to the fourth target TB based on an operation result, where the target DCI is any one of the at least two pieces of DCI;

if the at least two pieces of DCI both disable a fourth target TB, determining the HARQ-ACK bit corresponding to the fourth target TB of the first occasion as a negative acknowledgement; and

if at least one DCI in the at least two pieces of DCI enables a fourth target TB and at least one DCI disables the fourth target TB, uniformly performing the first operation based on a decoding result of the fourth target TB of a valid PDSCH scheduled by any one DCI in the DCI enabling the fourth target TB, and determining the HARQ-ACK bit corresponding to the fourth target TB of the first occasion based on an operation result; or if at least one piece of DCI in the at least two pieces of DCI enables a fourth target TB and at least one piece of DCI disables the fourth target TB, setting a decoding result of the fourth target TB of a valid PDSCH scheduled by any one piece of DCI in the DCI disabling the fourth target TB to a preset value, uniformly performing the first operation based on the decoding result of the fourth target TB of a valid PDSCH scheduled by any one piece of DCI in the at least two pieces of DCI, and determining the HARQ-ACK bit corresponding to the fourth target TB of the first occasion based on an operation result.

The fourth target TB is any one of TBs configured by a network side.

Optionally, when a second TB disabling manner is used, the fifth setting module is configured for at least one of the following:

if a fifth target TB of the valid PDSCH associated with the first occasion is disabled, determining the HARQ-ACK bit corresponding to the fifth target TB of the first occasion as a negative acknowledgement; and

if at least one PDSCH in the valid PDSCH associated with the first occasion has a fifth target TB enabled, uniformly performing the first operation based on a decoding result of the fifth target TB of the valid PDSCH having the fifth target TB enabled, and determining the HARQ-ACK bit corresponding to the fifth target TB of the first occasion based on an operation result; or if at least one PDSCH in the valid PDSCH associated with the first occasion has a fifth target TB enabled, setting a decoding result of the fifth target TB of the valid PDSCH having the fifth target TB disabled to a preset value, uniformly performing the first operation based on the decoding result of the fifth target TB of the valid PDSCH associated with the first occasion, and determining the HARQ-ACK bit corresponding to the fifth target TB of the first occasion based on an operation result.

The fifth target TB is any one of TBs configured by a network side.

Optionally, when the codebook is the first codebook and dual code word transmission is configured to be allowed in a serving cell, if the spatial bundling is configured to be used, the fifth setting module is configured to:

when a quantity of pieces of DCI scheduling the valid PDSCH associated with the first occasion is one:

uniformly perform the first operation based on decoding results of all enabled TBs of the valid PDSCH scheduled by the DCI, and determine the HARQ-ACK bit corresponding to the first occasion based on an operation result; or set a decoding result of a TB disabled of the valid PDSCH to a preset value, uniformly perform the first operation based on decoding results of all configured TBs of the valid PDSCH scheduled by the DCI, and determine the HARQ-ACK bit corresponding to the first occasion based on an operation result;
and/or
when a quantity of pieces of DCI scheduling the valid PDSCH associated with the first occasion is at least two:

uniformly perform the first operation based on a decoding result of all enabled TBs of a valid PDSCH scheduled by target DCI, and determine the HARQ-ACK bit corresponding to the first occasion based on an operation result, or set a decoding result of a TB disabled of the valid PDSCH to a preset value, uniformly perform the first operation based on decoding results of all configured TBs of the valid PDSCH scheduled by the target DCI, and determine the HARQ-ACK bit corresponding to the first occasion based on an operation result, where the target DCI is any one of the at least two pieces of DCI.

The time domain bundling processing apparatus in this embodiment of this application, when the codebook is configured to use the time domain bundling for transmission, an occasion conflict problem can be solved by determining the target operation for the first codebook; and when the codebook is configured to use the time domain bundling for transmission, for the second codebook, an operation of dividing the bundling group can be determined by determining the target operation when the time domain bundling and the spatial bundling are jointly configured. Therefore, higher flexibility can be allowed to better match an actual application scenario, configuration flexibility can be improved, and PDSCH retransmission performance can be improved.

FIG. 6 is a diagram of a structure of a time domain bundling processing apparatus according to an embodiment of this application. As shown in FIG. 6, the time domain bundling processing apparatus 400 includes:
a first determining module 401, configured to determine a target operation when a codebook of the terminal is configured to use time domain bundling for transmission.

When the codebook is a first codebook, the target operation includes at least one of the following:

> a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table, and
> determining that a physical downlink shared channel PDSCH corresponding to the last time domain resource assignment record of any scheduled and/or configured row of a time domain resource assignment TDRA table is a valid PDSCH.

When the codebook is a second codebook, the target operation includes at least one of the following:

> in a case that spatial bundling is not configured to be used, uniformly dividing bundling group(s) for a plurality of transport blocks TBs, or separately dividing bundling group(s) for each TB in the plurality of TBs; and
> in a case that the spatial bundling is configured to be used, dividing bundling group(s) for all scheduled PDSCHs or all valid PDSCHs scheduled by a piece of downlink control information DCI.

Optionally, when the codebook is a second codebook and the spatial bundling is not configured to be used, the target operation includes at least one of the following:

> dividing the bundling group(s) based on PDSCH(s) each of which corresponds to a configured time domain resource assignment record or a valid time domain resource assignment record; and
> dividing the bundling group(s) based on PDSCH(s) each of which corresponds to a valid time domain resource assignment record and has a reference TB enabled.

Optionally, when the codebook is a second codebook and the spatial bundling is not configured to be used, the target operation includes at least one of the following:
when a first TB disabling manner is used:

> if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;
> and/or
> when a second TB disabling manner is used,
> if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to a valid time domain resource assignment record and has the first target TB enabled, where
> the first target TB is any one of the plurality of TBs.

Optionally, the apparatus further includes:
a second determining module, configured to determine a mapping relationship between a HARQ-ACK bit in the codebook and the scheduled PDSCH according to whether the spatial bundling is configured to be used or not.

The time domain bundling processing apparatus in an embodiment of this application, when the codebook is configured to use the time domain bundling for transmission, an occasion conflict problem can be solved by determining the target operation for the first codebook; and When the codebook is configured to use the time domain bundling for transmission, for the second codebook, an operation of dividing the bundling group can be determined by determining the target operation when the time domain bundling and the spatial bundling are jointly configured. Therefore, higher flexibility can be allowed to better match an actual application scenario, configuration flexibility can be improved, and PDSCH retransmission performance can be improved.

The time domain bundling processing apparatus in this embodiment of this application may be an electronic device, such as an electronic device having an operating system, or a component in the electronic device, such as an integrated circuit or a chip. The electronic device may be a terminal or a device other than the terminal. For example, the terminal may include, but is not limited to, a type of the terminal 11 listed above, and another device may be a server, or a network attached storage (Network Attached Storage, NAS). This embodiment of this application is not specifically limited.

The time domain bundling processing apparatus according to this embodiment of this application can implement all processes implemented in the method embodiments shown in FIG. 2 to FIG. 4. Details are not described herein again.

Optionally, as shown in FIG. 7, embodiments of this application further provide an electronic device 500, including a processor 501 and a memory 502. The memory 502 stores a program or instructions executable on the processor 501. For example, when the communication device 500 is a terminal, and the program or instructions are executed by the processor 501, each step of the time domain bundling processing methods is implemented, and the same technical effects can be achieved. When the communication device 500 is a network side device, and the program or instructions are executed by the processor 501, each step of the time domain bundling processing methods is implemented, and the same technical effects can be achieved. This will not be described in detail herein again to avoid repetition.

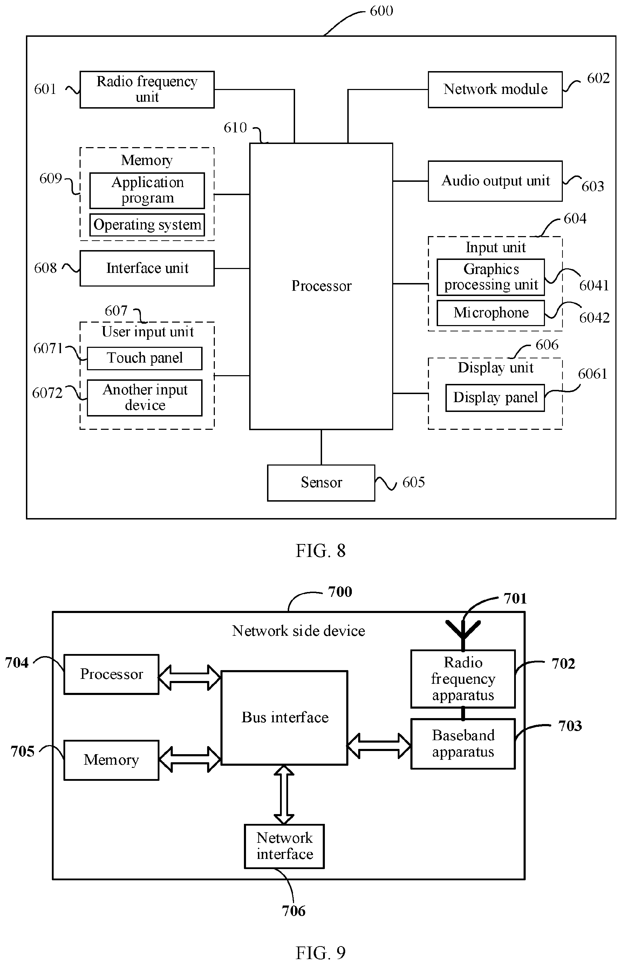

This embodiment of this application also provides a terminal including a processor and a communication interface, where the processor is configured to: determine a target operation when the terminal is configured to use time domain bundling for codebook transmission. When a codebook is a first codebook, the target operation includes at least one of the following: not expecting that a quantity of scheduled rows in a row set corresponding to a first occasion is greater than 1; expecting that a physical downlink shared channel PDSCH corresponding to the last time domain resource assignment record of any scheduled and/or configured row of a time domain resource assignment TDRA table is a valid PDSCH; and when the quantity of scheduled rows in the row set corresponding to the first occasion is greater than 1, performing a first operation on the scheduled row in the row set corresponding to the first occasion. The first occasion is any one occasion in an occasion set corresponding to the codebook, and the row set corresponding to the first occasion includes row(s) corresponding to the first occasion in the TDRA table. When a codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI. The terminal embodiment corresponds to the terminal side method embodiment, and each implementation process and implementation manner of the method embodiment can be applied to the terminal embodiment, and the same technical effect can be achieved. Specifically, FIG. 8 is a schematic diagram of a hardware structure of a terminal according to this embodiment of this application.

The terminal 600 includes, but is not limited to: at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) for supplying power to the components. The power supply may be logically connected to the processor 610 by a power management system, to implement functions such as charging, discharging, and power consumption management by using the power management system. The structure of the terminal shown in FIG. 8 does not constitute a limitation on the terminal, and the terminal may include more or fewer components than shown, or combine some components, or have different component arrangements. Details are not described herein again.

It should be understood that, in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061, and the display panel 6061 may be configured by using a liquid crystal display, an organic light-emitting diode, or the like. The user input unit 607 includes at least one of a touch panel 6071 and another input device 6072. The touch panel 6071 is also known as a touch screen. The touch panel 6071 may include two parts: a touch detection apparatus and a touch controller. Specifically, the another input device 6072 may include, but is not limited to, a physical keyboard, a functional key (such as a volume control key or a switch key), a track ball, a mouse, and a joystick. Details are not repeated herein.

In the embodiment of this application, the radio frequency unit 601 receives downlink data from a network side device, and then transmits the downlink data to the processor 610 for processing. In addition, the radio frequency unit 601 may send uplink data to the network side device. Generally, the radio frequency unit 601 includes, but is not limited to, an antenna, an amplifier, a transceiver, a coupler, a low noise amplifier, a duplexer, and the like.

The memory 609 is configured to store a software program or instructions and various types of data. The memory 609 may mainly include a first storage area storing a program or instructions and a second storage area storing data. The first storage area may store an operating system, an application program or instructions required by at least one function (such as a sound playback function and an image display function), and the like. In addition, the memory 609 may include a volatile memory or a non-volatile memory, or the memory 609 may include both a volatile memory and a non-volatile memory The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 609 in this embodiment of this application includes, but is not limited to, these memories and any other suitable types.

The processor 610 may include one or more processing units. Optionally, the processor 610 may integrate an application processor and a modem processor. The application processor mainly processes an operating system, a user interface, an application program, and the like. The modem processor mainly processes wireless communication, for example, a baseband processor. It may be understood that the foregoing modem processor may either not be integrated into the processor 610.

The processor 610 is configured to: determine a target operation when the terminal is configured to use time domain bundling for codebook transmission.

When a codebook is a first codebook, the target operation includes at least one of the following:

   not expecting that a quantity of scheduled rows in a row set corresponding to a first occasion is greater than 1;
   expecting that a physical downlink shared channel PDSCH corresponding to the last time domain resource assignment record of any scheduled and/or configured row of a time domain resource assignment TDRA table is a valid PDSCH; and
   when the quantity of scheduled rows in the row set corresponding to the first occasion is greater than 1, performing a first operation on the scheduled row in the row set corresponding to the first occasion.

The first occasion is any one occasion in an occasion set corresponding to the codebook, and the row set corresponding to the first occasion includes the row corresponding to the first occasion in the TDRA table.

When a codebook is a second codebook, the target operation includes at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

Optionally, when the codebook is the second codebook and the spatial bundling is not configured to be used, the target operation includes any one of the following:

   dividing the bundling group(s) based on PDSCH(s) each of which corresponds to a configured time domain resource assignment record or a valid time domain resource assignment record; or
   dividing the bundling group(s) based on PDSCH(s) each of which corresponds to a valid time domain resource assignment record and has a reference TB enabled.

Optionally, when the codebook is the second codebook and the spatial bundling is not configured to be used, the target operation includes:
when a first TB disabling manner is used:

   if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;
   and/or
   when a second TB disabling manner is used:

      if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to a valid time domain resource assignment record and has the first target TB enabled, where the first target TB is any one of the plurality of TBs.

Optionally, the processor 610 is configured to:
when the first TB disabling manner is used:

   if the first target TB of the valid PDSCH scheduled by the DCI is disabled, determine a hybrid automatic repeat request acknowledgement HARQ-ACK bit corresponding to the first target TB of the DCI or a downlink assignment index DAI as a negative acknowledgement;
and/or
when the second TB disabling manner is used:
if the first target TB of all valid PDSCHs scheduled by the DCI is disabled, determine a HARQ-ACK bit corresponding to the first target TB of the DCI or a DAI as a negative acknowledgement.

Optionally, when the codebook is the second codebook, the processor 610 is configured to:

when the bundling group(s) is empty or the PDSCH(s) included in the bundling group(s) is invalid PDSCH(s), determine the HARQ-ACK bit corresponding to the bundling group(s) as a negative acknowledgement;
and/or
when the bundling group(s) includes at least one valid PDSCH,
if the valid PDSCH(s) included in the bundling group(s) has a second target TB disabled, determine the HARQ-ACK bit of the second target TB of the bundling group(s) as a negative acknowledgement;
and/or
if at least one valid PDSCH in the valid PDSCH(s) included in the bundling group(s) has a second target TB enabled, uniformly perform the first operation based on a decoding result of the second target TB enabled of the at least one valid PDSCH, and determine the HARQ-ACK bit of the second target TB of the bundling group(s) based on an operation result; or if at least one valid PDSCH in the valid PDSCH(s) included in the bundling group(s) has a second target TB enabled, set a decoding result of the second target TB of a valid PDSCH having the second target TB disabled to a preset value, uniformly perform the first operation based on the decoding result of the second target TB of the valid PDSCH(s) included in the bundling group(s), and determine the HARQ-ACK bit of the second target TB of the bundling group(s) based on an operation result.

The second target TB is any one of TBs configured by a network side.

Optionally, the processor 610 is configured to:

when the bundling group(s) does not include the PDSCH(s) each of which corresponds to the valid time domain resource assignment record and has the first target TB enabled, determine a HARQ-ACK bit corresponding to the bundling group(s) as a negative acknowledgement;
and/or
when the bundling group(s) includes at least one PDSCH each of which corresponds to the valid time domain resource assignment record and has the first target TB enabled:

uniformly perform the first operation based on a decoding result of the at least one PDSCH, and determine a HARQ-ACK bit of the first target TB of the bundling group(s) based on an operation result, or set a decoding result of the first target TB of a PDSCH corresponding to the valid time domain resource assignment record and having the first target TB disabled in the bundling group(s) to a preset value, uniformly perform the first operation based on the decoding result of the first target TB of the valid PDSCH included in the bundling group(s), and determine a HARQ-ACK bit of the first target TB of the bundling group(s) based on the operation result.

Optionally, the target operation further includes:

the reference TB is determined, where
the reference TB is any one of the following:
a first TB, a second TB, a TB mapped to a code word CW0 or a code word CW1, a 1st enabled TB, and a third target TB.

The third target TB is a TB with a maximum quantity of valid PDSCHs for enabling the third target TB.

Optionally, the processor 610 is configured for at least one of the following, when the codebook is the first codebook and dual code word transmission is not configured to be allowed in a serving cell:

if the valid PDSCH associated with the first occasion is scheduled by a single piece of DCI, the first operation is uniformly performed based on a decoding result of the valid PDSCH associated with the first occasion, and a HARQ-ACK bit corresponding to the first occasion is determined based on an operation result; and
if the valid PDSCH associated with the first occasion is scheduled by at least two pieces of DCI, the first operation is uniformly performed based on a decoding result of the valid PDSCH scheduled by any one of the at least two pieces of DCI, and a HARQ-ACK bit corresponding to the first occasion is determined based on an operation result.

Optionally, the processor 610 is configured for at least one of the following, when the codebook is the first codebook and dual code word transmission is configured to be allowed in a serving cell:

if the spatial bundling is not configured to be used, a HARQ-ACK bit is determined in a TB disabling manner; and
if the spatial bundling is configured to be used, a HARQ-ACK bit is determined based on the DCI corresponding to the valid PDSCH associated with the first occasion.

Optionally, when a first TB disabling manner is used and the valid PDSCH associated with the first occasion is scheduled by at least two pieces of DCI, the processor 610 is configured for at least one of the following:

if the at least two pieces of DCI both enable a fourth target TB, the first operation is uniformly performed based on a decoding result of the fourth target TB of a valid PDSCH scheduled by target DCI, and the HARQ-ACK bit corresponding to the fourth target TB is determined based on an operation result, where the target DCI is any one of the at least two pieces of DCI;

if the at least two pieces of DCI both disable a fourth target TB, the HARQ-ACK bit corresponding to the fourth target TB of the first occasion is determined as a negative acknowledgement; and

if at least one DCI in the at least two pieces of DCI enables a fourth target TB and at least one piece of DCI disables the fourth target TB, the first operation is uniformly performed based on a decoding result of the fourth target TB of a valid PDSCH scheduled by any one piece of DCI in the DCI enabling the fourth target TB, and the HARQ-ACK bit corresponding to the fourth target TB of the first occasion is determined based on an operation result; or if at least one piece of DCI in the at least two pieces of DCI enables a fourth target TB and at least one piece of DCI disables the fourth target TB, a decoding result of the fourth target TB of a valid PDSCH scheduled by any one piece of DCI in the DCI disabling the fourth target TB is determined as a preset value, the first operation is uniformly performed based on the decoding result of the fourth target TB of a valid PDSCH scheduled by any one piece of DCI in the at least two pieces of DCI, and the HARQ-ACK bit corresponding to the fourth target TB of the first occasion is determined based on an operation result.

The fourth target TB is any one of TBs configured by a network side.

Optionally, when a second TB disabling manner is used, the processor 610 is configured for at least one of the following:

if a fifth target TB of the valid PDSCH associated with the first occasion is disabled, the HARQ-ACK bit corresponding to the fifth target TB of the first occasion is determined as a negative acknowledgement; and

if at least one PDSCH in the valid PDSCH associated with the first occasion has a fifth target TB enabled, the first operation is uniformly performed based on a decoding result of the fifth target TB of the valid PDSCH having the fifth target TB enabled, and the HARQ-ACK bit corresponding to the fifth target TB of the first occasion is determined based on an operation result; or if at least one PDSCH in the valid PDSCH associated with the first occasion has a fifth target TB enabled, a decoding result of the fifth target TB of the valid PDSCH having the fifth target TB disabled is set to a preset value, the first operation is uniformly performed based on the decoding result of the fifth target TB of the valid PDSCH associated with the first occasion, and the HARQ-ACK bit corresponding to the fifth target TB of the first occasion is determined based on an operation result.

The fifth target TB is any one of TBs configured by a network side.

Optionally, when the codebook is the first codebook and dual code word transmission is configured to be allowed in a serving cell, if the spatial bundling is configured to be used, the processor 610 is configured to: when a quantity of pieces of DCI scheduling the valid PDSCH associated with the first occasion is one:

uniformly perform the first operation based on decoding results of all enabled TBs of the valid PDSCH scheduled by the DCI, and determine the HARQ-ACK bit corresponding to the first occasion based on an operation result, or set a decoding result of a TB disabled of the valid PDSCH to a preset value, uniformly perform the first operation based on decoding results of all configured TBs of the valid PDSCH scheduled by the DCI, and determine the HARQ-ACK bit corresponding to the first occasion based on an operation result;

and/or

when a quantity of pieces of DCI scheduling the valid PDSCH associated with the first occasion is at least two:

uniformly perform the first operation based on a decoding result of all enabled TBs of a valid PDSCH scheduled by target DCI, and determine the HARQ-ACK bit corresponding to the first occasion based on an operation result, or set a decoding result of a TB disabled of the valid PDSCH to a preset value, uniformly perform the first operation based on decoding results of all configured TBs of the valid PDSCH scheduled by the target DCI, and determine the HARQ-ACK bit corresponding to the first occasion based on an operation result, where the target DCI is any one of the at least two pieces of DCI.

In this embodiment of this application, the terminal determines a target operation when the terminal is configured to use time domain bundling for codebook transmission. When a codebook is a first codebook, the target operation includes at least one of the following: not expecting that a quantity of scheduled rows in a row set corresponding to a first occasion is greater than 1; expecting that a physical downlink shared channel PDSCH corresponding to the last time domain resource assignment record of any scheduled and/or configured row of a time domain resource assignment TDRA table is a valid PDSCH; and when the quantity of scheduled rows in the row set corresponding to the first occasion is greater than 1, performing a first operation on the scheduled row in the row set corresponding to the first occasion. The first occasion is any one occasion in an occasion set corresponding to the codebook, and the row set corresponding to the first occasion includes row(s) corresponding to the first occasion in the TDRA table. When a codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI. In this way, when the codebook is configured to use time domain bundling for transmission, higher flexibility can be allowed to better match an actual application scenario, so that configuration flexibility can be improved, and PDSCH retransmission performance can be improved.

This embodiment of this application further provides a network side device, including a processor and a communication interface, and the processor is configured to: determine a target operation when a codebook of a terminal is configured to use time domain bundling for transmission. When the codebook is a first codebook, the target operation includes at least one of the following: a quantity of scheduled rows in a row set corresponding to a first occasion being not greater than 1, where the first occasion is any one occasion in an occasion set corresponding to the codebook, and the row set corresponding to the first occasion includes row(s) corresponding to the first occasion in a TDRA table; and determining that a physical downlink shared channel PDSCH corresponding to the last time domain resource assignment record of any scheduled and/or configured row of a time domain resource assignment TDRA table is a valid PDSCH. When the codebook is a second codebook, the target operation includes at least one of the following: in a case that spatial bundling is not configured to be used, uniformly dividing bundling group(s) for a plurality of transport blocks TBs, or separately dividing bundling group(s) for each TB in the plurality of TBs; and in a case that the spatial bundling is configured to be used, dividing bundling group(s) for all scheduled PDSCHs or all valid PDSCHs scheduled by a piece of downlink control information DCI. The network side device embodiment corresponds to the network side device method embodiment, and each implementation process and implementation of the method embodiment can be applied to the network side device embodiment, and the same technical effect can be achieved.

Specifically, this embodiment of this application further provides a network side device. As shown in FIG. 9, the network side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701 and sends the received information to the baseband apparatus 703 for processing. In a downlink direction, the baseband apparatus 703 processes information to be sent and sends the information to the radio frequency apparatus 702. The radio frequency apparatus 702 processes the received information and sends the information through the antenna 701.

The method performed by the network side device in the above embodiments may be implemented in the baseband apparatus 703, and the baseband apparatus 703 includes a baseband processor.

The baseband apparatus 703 may, for example, include at least one baseband board on which a plurality of chips are provided. As shown in FIG. 9, one chip, for example, a baseband processor is connected to the memory 705 through a bus interface to invoke a program in the memory 705, to perform the operations of a network device shown in the above method embodiments.

The network side device may also include a network interface 706, and the interface is, for example, a common public radio interface (common public radio interface, CPRI).

Specifically, the network side device 700 in the embodiment of this application further includes: instructions or a program stored in the memory 705 and executable on the processor 704. The processor 704 invokes the instructions or program in the memory 705 to perform the method performed by each module shown in FIG. 6 to achieve the same technical effect. Details are not described herein to avoid repetition.

The embodiment of this application further provides a readable storage medium, which may be volatile or non-volatile. The readable storage medium stores a program or instructions. When the program or instructions are executed by the processor, each process of the foregoing time domain bundling processing method embodiments is implemented, and the same technical effects can be achieved. Details are not described herein again to avoid repetition.

The processor is a processor in the terminal in the foregoing embodiments. The readable storage medium includes a computer-readable storage medium, such as a computer read-only memory ROM, a random access memory RAM, a magnetic disk or an optical disk.

The embodiment of this application provides a chip, including a processor and a communication interface. The communication interface is coupled to the processor. The processor is configured to run a program or instructions to implement each process of the time domain bundling processing method embodiments described above, and the same technical effects can be achieved. Details are not described herein again to avoid repetition.

It should be understood that the chip mentioned in this embodiment of this application may also be referred to as a system-level chip, a system chip, a chip system, or an on-chip system chip or the like.

The embodiment of this application further provides a computer program product, stored in a storage medium. The computer program product is executed by at least one processor to implement each process of the time domain bundling processing method embodiments, and the same technical effects can be achieved. Details are not described herein again to avoid repetition.

The embodiment of this application also provides a time domain bundling processing system, including: a terminal and a network side device. The device can be configured to perform the steps of the time domain bundling processing method applied to the terminal as described above, and the network side device can be configured to perform the steps of the time domain bundling processing method applied to the network side device as described above.

It should be noted that, the terms "include", "comprise", or any other variation thereof in this specification are intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" do not exclude that there are still other same elements in the processes, methods, objects, or apparatuses. Further, it should be noted that the scope of the methods and apparatus in the embodiments of this application is not limited to performing functions in the order shown or discussed, but may also include performing functions in a substantially simultaneous manner or in a reverse order depending on the functions involved, for example, the described methods may be performed in a different order than described, and various steps may be added, omitted, or combined. In addition, features described in some examples may also be combined in other examples.

Based on the descriptions in the foregoing implementations, a person skilled in the art may clearly learn that the method according to the foregoing embodiment may be implemented by relying on software and a commodity hardware platform or by using hardware. However, in many cases, the former is a better implementation. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal device (which may be a mobile phone, a computer, a server, a network device, or the like) to perform the methods described in the embodiments of the present invention.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A time domain bundling processing method, comprising:

   determining, by a terminal, a target operation in a case that the terminal is configured to use time domain bundling for codebook transmission; wherein
   in a case that a codebook is a first codebook, the target operation comprises at least one of the following:

      not expecting that a quantity of scheduled rows in a row set corresponding to a first occasion is greater than 1;
      expecting that a physical downlink shared channel PDSCH corresponding to the last time domain resource assignment record of any scheduled and/or configured row of a time domain resource assignment TDRA table is a valid PDSCH; and
      in a case that the quantity of scheduled rows in the row set corresponding to the first occasion is greater than 1, performing a first operation on the scheduled rows in the row set corresponding to the first occasion; wherein
      the first occasion is any one occasion in an occasion set corresponding to the codebook, and the row set corresponding to the first occasion comprises row(s) corresponding to the first occasion in the TDRA table;
      or
      in a case that a codebook is a second codebook, the target operation comprises at least one of the following:

         in a case that spatial bundling is not configured to be used, uniformly dividing bundling group(s) for a plurality of transport blocks TBs, or separately dividing bundling group(s) for each TB in the plurality of TBs; and
         in a case that the spatial bundling is configured to be used, dividing bundling group(s) for all scheduled PDSCHs or all valid PDSCHs scheduled by a piece of downlink control information DCI.

2. The method according to claim 1, wherein the uniformly dividing bundling group(s) for a plurality of transport blocks TBs comprises any one of the following:

dividing the bundling group(s) based on PDSCH(s) each of which corresponds to a configured time domain resource assignment record or a valid time domain resource assignment record; or
dividing the bundling group(s) based on PDSCH(s) each of which corresponds to a valid time domain resource assignment record and has a reference TB enabled.

3. The method according to claim 1, wherein the separately dividing bundling group(s) for each TB in the plurality of TBs comprises:
in a case that a first TB disabling manner is used:

if a first target TB of valid PDSCH(s) scheduled by DCI is enabled, dividing the bundling group(s) for the first target TB based on PDSCH(s) each of which corresponds to a configured time domain resource assignment record or a valid time domain resource assignment record;
and/or
in a case that a second TB disabling manner is used:

if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to a valid time domain resource assignment record and has the first target TB enabled; wherein the first target TB is any one of the plurality of TBs.

4. The method according to claim 3, wherein the method further comprises:
in a case that the first TB disabling manner is used:

if the first target TB of the valid PDSCH scheduled by the DCI is disabled, determining a hybrid automatic repeat request acknowledgement HARQ-ACK bit corresponding to the first target TB of the DCI or a downlink assignment index DAI as a negative acknowledgement;
and/or

in a case that the second TB disabling manner is used:
if the first target TB of all the valid PDSCHs scheduled by the DCI is disabled, determining a HARQ-ACK bit corresponding to the first target TB of the DCI or a DAI as a negative acknowledgement.

5. The method according to any one of claims 1 to 4, wherein after the determining a target operation, in a case that the codebook is the second codebook, the method further comprises:

in a case that the bundling group(s) is empty or PDSCH(s) comprised in the bundling group(s) is invalid PDSCH(s), determining a HARQ-ACK bit corresponding to the bundling group(s) as a negative acknowledgement;
and/or
in a case that the bundling group(s) comprises at least one valid PDSCH:

if valid PDSCH(s) comprised in the bundling group(s) has a second target TB disabled, determining a HARQ-ACK bit of the second target TB of the bundling group(s) as a negative acknowledgement; and/or
if at least one valid PDSCH in the valid PDSCH(s) comprised in the bundling group(s) has a second target TB enabled, uniformly performing the first operation based on a decoding result of the second target TB enabled of the at least one valid PDSCH, and determining the HARQ-ACK bit of the second target TB of the bundling group(s) based on an operation result; or if at least one valid PDSCH in the valid PDSCH(s) comprised in the bundling group(s) has a second target TB enabled, setting a decoding result of the second target TB of a valid PDSCH having the second target TB disabled to a preset value, uniformly performing the first operation based on the decoding result of the second target TB of the valid PDSCH(s) comprised in the bundling group(s), and determining the HARQ-ACK bit of the second target TB of the bundling group(s) based on an operation result, wherein
the second target TB is any one of TBs configured by a network side.

6. The method according to claim 3, wherein after the dividing the bundling group(s) based on PDSCH(s) each of which corresponds to the valid time domain resource assignment record and has the first target TB enabled, the method further comprises:

in a case that the bundling group(s) does not comprise the PDSCH(s) each of which corresponds to the valid time domain resource assignment record and has the first target TB enabled, determining a HARQ-ACK bit corresponding to the bundling group(s) as a negative acknowledgement;
and/or
in a case that the bundling group(s) comprises at least one PDSCH each of which corresponds to the valid time domain resource assignment record and has the first target TB enabled: uniformly performing the first operation based on a decoding result of the at least one PDSCH, and determining a HARQ-ACK bit of the first target TB of the bundling group(s) based on an operation result, or setting a decoding result of the first target TB of a PDSCH corresponding to the valid time domain resource assignment record and having the first target TB disabled in the bundling group(s) to a preset value, uniformly performing the first operation based on the decoding result of the first target TB of the valid PDSCH(s) comprised in the bundling group(s), and determining a HARQ-ACK bit of the first target TB of the bundling group(s) based on the operation result.

7. The method according to claim 2, wherein before the dividing the bundling group(s) based on PDSCH(s) each of which corresponds to a valid time domain resource assignment record and has a reference TB enabled, the method further comprises:

   determining the reference TB; wherein the reference TB is any one of the following:

      a first TB, a second TB, a TB mapped to a code word CW0 or a code word CW1, a 1st enabled TB, and a third target TB; wherein the third target TB is a TB with a maximum quantity of valid PDSCHs having the third target TB enabled.

8. The method according to claim 1, wherein in a case that the codebook is the first codebook and dual code word transmission is not configured to be allowed in a serving cell, the method further comprises at least one of the following:

   if valid PDSCH associated with the first occasion is scheduled by a single piece of DCI, uniformly performing the first operation based on a decoding result of the valid PDSCH associated with the first occasion, and determining a HARQ-ACK bit corresponding to the first occasion based on an operation result; and
   if the valid PDSCH associated with the first occasion is scheduled by at least two pieces of DCI, uniformly performing the first operation based on a decoding result of the valid PDSCH scheduled by any one of the at least two pieces of DCI, and determining a HARQ-ACK bit corresponding to the first occasion based on an operation result.

9. The method according to claim 1, wherein in a case that the codebook is the first codebook and dual code word transmission is configured to be allowed in a serving cell, the method further comprises at least one of the following:

   if the spatial bundling is not configured to be used, determining a HARQ-ACK bit in a TB disabling manner; and
   if the spatial bundling is configured to be used, determining a HARQ-ACK bit based on DCI corresponding to valid PDSCH associated with the first occasion.

10. The method according to claim 9, wherein in a case that a first TB disabling manner is used and the valid PDSCH associated with the first occasion is scheduled by at least two pieces of DCI, the determining a HARQ-ACK bit in a TB disabling manner comprises at least one of the following:

   if the at least two pieces of DCI both enable a fourth target TB, uniformly performing the first operation based on a decoding result of the fourth target TB of a valid PDSCH scheduled by target DCI, and determining the HARQ-ACK bit corresponding to the fourth target TB based on an operation result, wherein the target DCI is any one of the at least two pieces of DCI;
   if the at least two pieces of DCI both disable the fourth target TB, determining the HARQ-ACK bit corresponding to the fourth target TB of the first occasion as a negative acknowledgement; and
   if at least one piece of DCI in the at least two pieces of DCI enables the fourth target TB and at least one piece of DCI disables the fourth target TB, uniformly performing the first operation based on a decoding result of the fourth target TB of a valid PDSCH scheduled by any one piece of DCI in the DCI enabling the fourth target TB, and determining the HARQ-ACK bit corresponding to the fourth target TB of the first occasion based on an operation result; or if at least one piece of DCI in the at least two pieces of DCI enables the fourth target TB and at least one piece of DCI disables the fourth target TB, setting a decoding result of the fourth target TB of a valid PDSCH scheduled by any one piece of DCI in the DCI disabling the fourth target TB to a preset value, uniformly performing the first operation based on the decoding result of the fourth target TB of a valid PDSCH scheduled by any one piece of DCI in the at least two pieces of DCI, and determining the HARQ-ACK bit corresponding to the fourth target TB of the first occasion based on an operation result, wherein the fourth target TB is any one of TBs configured by a network side.

11. The method according to claim 9, wherein in a case that a second TB disabling manner is used, the determining a HARQ-ACK bit in a TB disabling manner comprises at least one of the following:

if a fifth target TB of the valid PDSCH associated with the first occasion is disabled, determining the HARQ-ACK bit corresponding to the fifth target TB of the first occasion as a negative acknowledgement; and

if at least one PDSCH in the valid PDSCH associated with the first occasion has a fifth target TB enabled, uniformly performing the first operation based on a decoding result of the fifth target TB of the valid PDSCH having the fifth target TB enabled, and determining the HARQ-ACK bit corresponding to the fifth target TB of the first occasion based on an operation result; or if at least one PDSCH in the valid PDSCH associated with the first occasion has a fifth target TB enabled, setting a decoding result of the fifth target TB of valid PDSCH having the fifth target TB disabled to a preset value, uniformly performing the first operation based on the decoding result of the fifth target TB of the valid PDSCH associated with the first occasion, and determining the HARQ-ACK bit corresponding to the fifth target TB of the first occasion based on an operation result, wherein

the fifth target TB is any one of TBs configured by a network side.

12. The method according to claim 9, wherein the determining a HARQ-ACK bit based on DCI corresponding to valid PDSCH associated with the first occasion comprises:
in a case that a quantity of pieces of DCI scheduling the valid PDSCH associated with the first occasion is one:

uniformly performing the first operation based on decoding results of all enabled TBs of the valid PDSCH scheduled by the DCI, and determining the HARQ-ACK bit corresponding to the first occasion based on an operation result, or setting a decoding result of a TB disabled of the valid PDSCH to a preset value, uniformly performing the first operation based on decoding results of all configured TBs of the valid PDSCH scheduled by the DCI, and determining the HARQ-ACK bit corresponding to the first occasion based on an operation result;
and/or
in a case that a quantity of pieces of DCI scheduling the valid PDSCH associated with the first occasion is at least two:
uniformly performing the first operation based on a decoding result of all enabled TBs of a valid PDSCH scheduled by target DCI, and determining the HARQ-ACK bit corresponding to the first occasion based on an operation result, or setting a decoding result of a TB disabled of the valid PDSCH to a preset value, uniformly performing the first operation based on decoding results of all configured TBs of the valid PDSCH scheduled by the target DCI, and determining the HARQ-ACK bit corresponding to the first occasion based on an operation result, wherein the target DCI is any one of the at least two pieces of DCI.

13. A time domain bundling processing method, comprising:

determining, by a network side device, a target operation in a case that a codebook of a terminal is configured to use time domain bundling for transmission; wherein
in a case that the codebook is a first codebook, the target operation comprises at least one of the following:

a quantity of scheduled rows in a row set corresponding to a first occasion being not greater than 1, wherein the first occasion is any one occasion in an occasion set corresponding to the codebook, and the row set corresponding to the first occasion comprises row(s) corresponding to the first occasion in a TDRA table; and
determining that a physical downlink shared channel PDSCH corresponding to the last time domain resource assignment record of any scheduled and/or configured row of a time domain resource assignment TDRA table is a valid PDSCH;
or
in a case that the codebook is a second codebook, the target operation comprises at least one of the following:

in a case that spatial bundling is not configured to be used, uniformly dividing bundling group(s) for a plurality of transport blocks TBs, or separately dividing bundling group(s) for each TB in the plurality of TBs; and

in a case that the spatial bundling is configured to be used, dividing bundling group(s) for all scheduled PDSCHs or all valid PDSCHs scheduled by a piece of downlink control information DCI.

14. The method according to claim 13, wherein the uniformly dividing bundling group(s) for a plurality of transport blocks TBs comprises any one of the following:

dividing the bundling group(s) based on PDSCH(s) each of which corresponds to a configured time domain resource assignment record or a valid time domain resource assignment record; or
dividing the bundling group(s) based on PDSCH(s) each of which corresponds to a valid time domain resource assignment record and has a reference TB enabled.

15. The method according to claim 13, wherein the separately dividing bundling group(s) for each TB in the plurality of TBs comprises:
in a case that a first TB disabling manner is used:

if a first target TB of valid PDSCH(s) scheduled by the DCI is enabled, dividing the bundling group(s) for the first target TB based on PDSCH(s) each of which corresponds to a configured time domain resource assignment record or a valid time domain resource assignment record;
and/or
in a case that a second TB disabling manner is used:

if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to the valid time domain resource assignment record and has the first target TB enabled; wherein
the first target TB is any one of the plurality of TBs.

16. The method according to any one of claims 13 to 15, wherein after the determining a target operation, the method further comprises:
determining, by the network side device, a mapping relationship between a HARQ-ACK bit in the codebook and a scheduled PDSCH based on whether the spatial bundling is configured to be used or not.

17. A time domain bundling processing apparatus, comprising:

a determining module, configured to determine a target operation in a case that time domain bundling is configured to be used for codebook transmission; wherein
in a case that a codebook is a first codebook, the target operation comprises at least one of the following:

not expecting that a quantity of scheduled rows in a row set corresponding to a first occasion is greater than 1;
expecting that a physical downlink shared channel PDSCH corresponding to the last time domain resource assignment record of any scheduled and/or configured row of a time domain resource assignment TDRA table is a valid PDSCH; and
in a case that the quantity of scheduled rows in the row set corresponding to the first occasion is greater than 1, performing a first operation on the scheduled rows in the row set corresponding to the first occasion; wherein
the first occasion is any one occasion in an occasion set corresponding to the codebook, and the row set corresponding to the first occasion comprises row(s) corresponding to the first occasion in the TDRA table;
or
in a case that a codebook is a second codebook, the target operation comprises at least one of the following:

in a case that spatial bundling is not configured to be used, uniformly dividing bundling group(s) for a plurality of transport blocks TBs, or separately dividing bundling group(s) for each TB in the plurality of TBs; and
in a case that the spatial bundling is configured to be used, dividing bundling group(s) for all scheduled PDSCHs or all valid PDSCHs scheduled by a piece of downlink control information DCI.

18. The apparatus according to claim 17, wherein in a case that the codebook is the second codebook and the spatial bundling is not configured to be used, the target operation comprises any one of the following:

dividing the bundling group(s) based on PDSCH(s) each of which corresponds to a configured time domain resource assignment record or a valid time domain resource assignment record; or

dividing the bundling group(s) based on PDSCH(s) each of which corresponds to a valid time domain resource assignment record and has a reference TB enabled.

19. The apparatus according to claim 17, wherein in a case that the codebook is the second codebook and the spatial bundling is not configured to be used to be used, the target operation comprises:

in a case that a first TB disabling manner is used:

if a first target TB of valid PDSCH(s) scheduled by DCI is enabled, dividing the bundling group(s) for the first target TB based on PDSCH(s) each of which corresponds to a configured time domain resource assignment record or a valid time domain resource assignment record;

and/or

in a case that a second TB disabling manner is used:

if at least one valid PDSCH scheduled by the DCI has a first target TB enabled, dividing the bundling group(s) for the first target TB based on PDSCH(s) each of which corresponds to a configured time domain resource assignment record or a valid time domain resource assignment record, or dividing the bundling group(s) based on PDSCH(s) each of which corresponds to the valid time domain resource assignment record and has the first target TB enabled; wherein

the first target TB is any one of the plurality of TBs.

20. A time domain bundling processing apparatus, comprising:

a first determining module, configured to determine a target operation in a case that a codebook of a terminal is configured to use time domain bundling for transmission; wherein

in a case that the codebook is a first codebook, the target operation comprises at least one of the following:

a quantity of scheduled rows in a row set corresponding to a first occasion not greater than 1, wherein the first occasion is any one occasion in an occasion set corresponding to the codebook, and the row set corresponding to the first occasion comprises row(s) corresponding to the first occasion in a TDRA table; and

determining that a physical downlink shared channel PDSCH corresponding to the last time domain resource assignment record of any scheduled and/or configured row of a time domain resource assignment TDRA table is a valid PDSCH;

or

in a case that the codebook is a second codebook, the target operation comprises at least one of the following:

in a case that spatial bundling is not configured to be used, uniformly dividing bundling group(s) for a plurality of transport blocks TBs, or separately dividing bundling group(s) for each TB in the plurality of TBs; and

in a case that the spatial bundling is configured to be used, dividing bundling group(s) for all scheduled PDSCHs or all valid PDSCHs scheduled by a piece of downlink control information DCI.

21. A terminal, comprising a processor and a memory, wherein the memory stores a program or instructions executable on the processor; and when the program or instructions are executed by the processor, the steps of the time domain bundling processing method according to any one of claims 1 to 12 are implemented.

22. A network side device, comprising a processor and a memory, wherein the memory stores a program or instructions executable on the processor; and when the program or instructions are executed by the processor, the steps of the time domain bundling processing method according to any one of claims 13 to 16 are implemented.

23. A readable storage medium, storing a program or instructions; wherein when the program or instructions are executed by the processor, the steps of the time domain bundling processing method according to any one of claims 1 to 12 are implemented, or the steps of the time domain bundling processing method according to any one of claims 13 to 16 are implemented.

Network
side device

Terminal

Terminal

FIG. 1

Start

A terminal determines a target operation when the terminal is configured to use
time domain bundling for codebook transmission          101

End

FIG. 2

| D | D | D | U | U | U |
|---|---|---|---|---|---|

Row (Row) 0          SLIV 0-0 | SLIV 0-1          PUCCH

Row (Row) 1                    SLIV 1-0

K1=2

FIG. 3

Start

A network side device determines a target operation when a codebook of a terminal is configured to use time domain bundling for transmission ⌐ 201

End

FIG. 4

⌐ 300

Time domain bundling processing apparatus

Determining module ⌐ 301

FIG. 5

⌐ 400

Time domain bundling processing apparatus

First determining module ⌐ 401

FIG. 6

⌐ 500

Communication device

501 ⌐ Processor ⟺ Memory ⌐ 502

FIG. 7

FIG. 8

FIG. 9

## INTERNATIONAL SEARCH REPORT

| International application No. |
| --- |
| **PCT/CN2022/144014** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 物理下行共享信道, 时域资源分配, 下行控制信息, 传输块, 绑定, 捆绑, 动态, 半静态, 码本, 码书, 时机, 有效, 表, 行, 数, PDSCH, TDRA, DCI, TB, bundle, dynamic, semi-static, codebook, occasion, valid, table, row, number

**C. DOCUMENTS CONSIDERED TO BE RELEVANT**

| Category* | Citation of document, with indication, where appropriate, of the relevant passages | Relevant to claim No. |
| --- | --- | --- |
| A | CN 112822775 A (SONY CORPORATION) 18 May 2021 (2021-05-18)<br>entire document | 1-23 |
| A | WO 2021035437 A1 (LENOVO BEIJING LTD.) 04 March 2021 (2021-03-04)<br>entire document | 1-23 |
| A | US 2021367727 A1 (LG ELECTRONICS INC.) 25 November 2021 (2021-11-25)<br>entire document | 1-23 |
| A | WO 2021248463 A1 (QUALCOMM INC. et al.) 16 December 2021 (2021-12-16)<br>entire document | 1-23 |
| X | MODERATOR (LG ELECTRONICS). "Summary #3 of PDSCH/PUSCH enhancements (Scheduling/HARQ)"<br>*3GPP TSG RAN WG1 #107-e R1-2112703*, 17 November 2021 (2021-11-17),<br>section 3 | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 February 2023** | **08 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/144014**

| Patent document cited in search report | | | Publication date (day/month/year) | Patent family member(s) | | | Publication date (day/month/year) |
|---|---|---|---|---|---|---|---|
| CN | 112822775 | A | 18 May 2021 | WO | 2021093699 | A1 | 20 May 2021 |
| | | | | CN | 114424475 | A | 29 April 2022 |
| | | | | EP | 4024734 | A1 | 06 July 2022 |
| | | | | EP | 4024734 | A4 | 12 October 2022 |
| WO | 2021035437 | A1 | 04 March 2021 | US | 2022330297 | A1 | 13 October 2022 |
| | | | | EP | 4018584 | A1 | 29 June 2022 |
| | | | | CN | 114270758 | A | 01 April 2022 |
| US | 2021367727 | A1 | 25 November 2021 | None | | | |
| WO | 2021248463 | A1 | 16 December 2021 | None | | | |

Form PCT/ISA/210 (patent family annex) (July 2022)

## REFERENCES CITED IN THE DESCRIPTION

**Patent documents cited in the description**

- CN 202111673268